# FASCICULE DE BREVET EUROPEEN

(11) **EP 3 830 374 B1**
(45) Date de publication et mention de la délivrance du brevet: **03.08.2022**
(21) Numéro de dépôt: 19746093.4
(22) Date de dépôt: 31.07.2019
(51) Int. Cl.: E06B 9/72

(54) **MODULE MÉCANIQUE DE FILTRAGE DE VIBRATIONS, ACTIONNEUR ÉLECTROMÉCANIQUE COMPRENANT UN TEL MODULE MÉCANIQUE DE FILTRAGE DE VIBRATIONS ET INSTALLATION DE FERMETURE, D'OCCULTATION OU DE PROTECTION SOLAIRE COMPRENANT UN TEL ACTIONNEUR ÉLECTROMÉCANIQUE**
MECHANISCHES MODUL ZUR FILTERUNG VON SCHWINGUNGEN, ELEKTROMECHANISCHER AKTUATOR MIT EINEM SOLCHEN MECHANISCHEN MODUL ZUM FILTERN VON SCHWINGUNGEN UND VERSCHLUSS, ABDECKUNG ODER SONNENSCHUTZANLAGE MIT EINEM SOLCHEN ELEKTROMECHANISCHEN AKTUATOR
MECHANICAL MODULE FOR FILTERING VIBRATIONS, ELECTROMECHANICAL ACTUATOR COMPRISING SUCH A MECHANICAL MODULE FOR FILTERING VIBRATIONS, AND CLOSURE, COVERING OR SOLAR PROTECTION INSTALLATION COMPRISING SUCH AN ELECTRO-MECHANICAL ACTUATOR

(30) Priorité: 01.08.2018 FR 1857201
(43) Date de publication de la demande: 09.06.2021
(73) Titulaire: Somfy Activites SA, 74300 Cluses (FR)
(72) Inventeur: SCHUEHMACHER, Cyril, 74700 Sallanches (FR); LEMAITRE, Sébastien, 74440 Mieussy (FR); PEZET, Jérôme, 74440 Taninges (FR)
(74) Mandataire: Novaimo
(86) Numéro de dépôt international: PCT/EP2019/070705
(87) Numéro de publication internationale: WO 2020/025711

(56) Documents cités:
- EP-A1- 0 531 079
- EP-A1- 1 727 959
- EP-B1- 0 531 079
- EP-B1- 1 727 959
- WO-A1-2018/104488
- WO-A1-2018/104488

## Description

La présente invention concerne un module mécanique de filtrage de vibrations destiné à être monté au moins en partie à l'intérieur d'un carter d'un actionneur électromécanique pour une installation de fermeture, d'occultation ou de protection solaire.

La présente invention concerne également un actionneur électromécanique comprenant un tel module mécanique de filtrage de vibrations, ainsi qu'une installation de fermeture, d'occultation ou de protection solaire comprenant un écran enroulable sur un tube d'enroulement entraîné en rotation par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

L'actionneur électromécanique est destiné à être monté à l'intérieur du tube d'enroulement. En outre, l'actionneur électromécanique comprend au moins un moteur électrique et, préférentiellement, un réducteur. Le moteur électrique et le réducteur génèrent des vibrations, lors de la mise en fonctionnement de l'actionneur électromécanique, qui peuvent être transmises aux éléments entourant le moteur électrique, notamment le carter de l'actionneur électromécanique et le tube d'enroulement.

Par conséquent, lors de la mise en fonctionnement de l'actionneur électromécanique et dans une configuration assemblée de l'actionneur électromécanique dans l'installation, l'actionneur électromécanique engendre du bruit.

On connaît déjà le document WO 2018/104488 A1 qui décrit un module mécanique de filtrage de vibrations destiné à être monté à l'intérieur d'un carter d'un actionneur électromécanique pour une installation de fermeture, d'occultation ou de protection solaire. Le module mécanique de filtrage de vibrations comprend un organe mécanique de filtrage de vibrations. L'organe mécanique de filtrage de vibrations est monobloc et s'étend suivant un axe longitudinal destiné à être aligné sur un axe de rotation d'un rotor d'un moteur électrique. L'organe mécanique de filtrage de vibrations comprend une première portion d'extrémité et une portion intermédiaire. La première portion d'extrémité comprend un premier anneau. La portion intermédiaire est reliée à la première portion d'extrémité. Le premier anneau de la première portion d'extrémité présente un premier diamètre supérieur à une dimension de la portion intermédiaire la plus grande et mesurée dans un plan orthogonal à l'axe longitudinal.

Cependant, ce module mécanique de filtrage de vibrations présente l'inconvénient de rendre la fabrication de l'organe mécanique de filtrage de vibrations difficile. Ceci est d'autant plus difficile que le diamètre intérieur du carter de l'actionneur électromécanique est petit.

Par conséquent, les dimensions de l'organe mécanique de filtrage de vibrations, l'épaisseur des liaisons de la portion intermédiaire, et la complexité des liaisons de la portion intermédiaire de celui-ci engendrent une complexité d'industrialisation, se traduisant par un coût élevé et des risques en termes de qualité.

Par ailleurs, l'industrialisation de l'organe mécanique de filtrage de vibrations présente des difficultés lors de l'injection de la matière plastique le constituant et notamment un gauchissement de ce dernier suivant sa longueur.

En outre, une telle structure de l'organe mécanique de filtrage de vibrations présente une longueur importante.

Par conséquent, l'organe mécanique de filtrage de vibrations engendre un encombrement important à l'intérieur du carter de l'actionneur et donc une longueur importante de l'actionneur électromécanique.

Par ailleurs, l'organe mécanique de filtrage de vibrations est configuré pour être fixé, d'une part, au carter de l'actionneur électromécanique et, d'autre part, au moteur électrique.

La présente invention a pour but de résoudre les inconvénients précités et de proposer un module mécanique de filtrage de vibrations destiné à être monté au moins en partie à l'intérieur d'un carter d'un actionneur électromécanique pour une installation de fermeture, d'occultation ou de protection solaire, ainsi qu'un actionneur électromécanique comprenant un tel module mécanique de filtrage de vibrations et une installation de fermeture, d'occultation ou de protection solaire comprenant un tel actionneur électromécanique, permettant de simplifier une structure d'un organe mécanique de filtrage de vibrations et de garantir une réduction d'une transmission de vibrations à partir de l'actionneur électromécanique vers l'installation, tout en minimisant les coûts d'obtention du module mécanique de filtrage de vibrations et donc de l'actionneur électromécanique.

A cet égard, la présente invention vise, selon un premier aspect, un module mécanique de filtrage de vibrations destiné à être monté au moins en partie à l'intérieur d'un carter d'un actionneur électromécanique pour une installation de fermeture, d'occultation ou de protection solaire,
le module mécanique de filtrage de vibrations comprenant au moins un organe mécanique de filtrage de vibrations, l'organe mécanique de filtrage de vibrations étant monobloc et s'étendant suivant un axe longitudinal destiné à être aligné sur un axe de rotation d'un rotor d'un moteur électrique,
l'organe mécanique de filtrage de vibrations comprenant au moins :
   - une première portion d'extrémité, la première portion d'extrémité comprenant au moins un premier anneau, et
   - une portion intermédiaire, la portion intermédiaire étant reliée à la première portion d'extrémité, le premier anneau de la première portion d'extrémité présentant un premier diamètre supérieur à une dimension de la portion intermédiaire la plus grande et mesurée dans un plan orthogonal à l'axe longitudinal.

Selon l'invention, la première portion d'extrémité comprend, en outre, une pluralité de premiers bras, chaque premier bras reliant la portion intermédiaire au premier anneau.

Ainsi, une telle structure de l'organe mécanique de filtrage de vibrations est simplifiée et permet de garantir une réduction d'une transmission de vibrations à partir de l'actionneur électromécanique vers l'installation, tout en minimisant les coûts d'obtention du module mécanique de filtrage de vibrations et donc de l'actionneur électromécanique.

De cette manière, l'industrialisation d'un tel module mécanique de filtrage de vibrations est facilitée.

La structure de l'organe mécanique de filtrage de vibrations permet d'obtenir une déformation de la portion intermédiaire, ainsi que d'obtenir un rotulage au niveau de la jonction entre la portion intermédiaire et la première portion d'extrémité.

La structure de l'organe mécanique de filtrage de vibrations permet également de minimiser la longueur de ce dernier et ainsi d'obtenir un module mécanique de filtrage de vibrations compact, de sorte à minimiser la longueur de l'actionneur électromécanique.

En outre, les premiers bras de la première portion d'extrémité permettent de garantir une raideur en torsion élevée et une raideur en flexion faible de l'organe mécanique de filtrage de vibrations.

Par ailleurs, un tel module mécanique de filtrage de vibrations est particulièrement adapté pour des actionneurs électromécaniques comprenant un carter ayant un faible diamètre.

Selon un mode de réalisation, la portion intermédiaire présente une section de forme circulaire, dans le plan orthogonal à l'axe longitudinal.

Selon un autre mode de réalisation, la portion intermédiaire présente une section de forme rectangulaire, dans le plan orthogonal à l'axe longitudinal.

Selon une caractéristique avantageuse de l'invention, l'organe mécanique de filtrage de vibrations comprend, en outre, au moins une deuxième portion d'extrémité, la deuxième portion d'extrémité étant opposée à la première portion d'extrémité, suivant l'axe longitudinal. La deuxième portion d'extrémité comprend au moins un deuxième anneau. La portion intermédiaire est reliée à la deuxième portion d'extrémité et disposée entre les première et deuxième portions d'extrémité. Le deuxième anneau de la deuxième portion d'extrémité présente un deuxième diamètre supérieur à la dimension de la portion intermédiaire la plus grande et mesurée dans le plan orthogonal à l'axe longitudinal.

Selon une autre caractéristique avantageuse de l'invention, le deuxième diamètre du deuxième anneau est inférieur au premier diamètre du premier anneau, ou inversement.

Selon une autre caractéristique avantageuse de l'invention, la deuxième portion d'extrémité comprend, en outre, une pluralité de deuxièmes bras, chaque deuxième bras reliant la portion intermédiaire au deuxième anneau.

Selon une autre caractéristique avantageuse de l'invention, les premiers bras sont décalés angulairement par rapport aux deuxièmes bras, autour de l'axe longitudinal, d'une valeur angulaire prédéterminée.

La présente invention vise, selon un deuxième aspect, un actionneur électromécanique pour une installation de fermeture, d'occultation ou de protection solaire, l'actionneur électromécanique comprenant au moins :
- un moteur électrique,
- un carter, le moteur électrique étant monté à l'intérieur du carter, dans une configuration assemblée de l'actionneur électromécanique, et
- un module mécanique de filtrage de vibrations, selon l'invention et tel que mentionné ci-dessus.

Cet actionneur électromécanique présente des caractéristiques et avantages analogues à ceux décrits précédemment, en relation avec le module mécanique de filtrage de vibrations selon l'invention.

Selon une autre caractéristique avantageuse de l'invention, dans la configuration assemblée de l'actionneur électromécanique, la première portion d'extrémité de l'organe mécanique de filtrage de vibrations est fixée au carter au moyen de premiers éléments de fixation.

Selon une autre caractéristique avantageuse de l'invention, l'actionneur électromécanique comprend, en outre, un support de couple, le support de couple étant disposé au niveau d'une première extrémité du carter de l'actionneur électromécanique, dans la configuration assemblée de l'actionneur électromécanique.

Selon une autre caractéristique avantageuse de l'invention, la deuxième portion d'extrémité de l'organe mécanique de filtrage de vibrations est fixée au support de couple au moyen de deuxièmes éléments de fixation.

Selon une autre caractéristique avantageuse de l'invention, l'actionneur électromécanique comprend une bague. En outre, la bague est montée autour d'un arbre du support de couple.

Selon une autre caractéristique avantageuse de l'invention, dans la configuration assemblée de l'actionneur électromécanique, l'actionneur électromécanique comprend, en outre, au moins un élément viscoélastique disposé entre la deuxième portion d'extrémité de l'organe mécanique de filtrage de vibrations et la bague.

Selon une autre caractéristique avantageuse de l'invention, dans la configuration assemblée de l'actionneur électromécanique, l'actionneur électromécanique comprend, en outre, au moins un élément viscoélastique disposé entre le carter de l'actionneur électromécanique et la bague.

Selon une autre caractéristique avantageuse de l'invention, dans la configuration assemblée de l'actionneur électromécanique, l'actionneur électromécanique comprend, en outre, au moins un élément viscoélastique disposé entre le support de couple et la bague.

En variante, la deuxième portion d'extrémité de l'organe mécanique de filtrage de vibrations forme le support de couple.

Selon une autre caractéristique avantageuse de l'invention, l'actionneur électromécanique comprend au moins une batterie, la batterie étant disposée à l'intérieur du carter.

Selon une autre caractéristique avantageuse de l'invention, la première portion d'extrémité comprend au moins un premier dégagement entre le premier anneau et l'un des premiers bras pour le passage d'au moins un câble.

La présente invention vise, selon un troisième aspect, une installation de fermeture, d'occultation ou de protection solaire comprenant un écran, un tube d'enroulement et un actionneur électromécanique, selon l'invention et tel que mentionné ci-dessus, l'écran étant enroulable sur le tube d'enroulement et le tube d'enroulement étant entraîné en rotation par l'actionneur électromécanique.

Cette installation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation conforme à un premier mode de réalisation de l'invention ;
- la figure 2 est une vue schématique en perspective de l'installation illustrée à la figure 1 ;
- la figure 3 est une vue en coupe schématique d'un actionneur électromécanique de l'installation illustrée aux figures 1 et 2, selon le premier mode de réalisation ;
- la figure 4 est une vue en coupe schématique d'une partie de l'actionneur électromécanique illustré à la figure 3, illustrant un module mécanique de filtrage de vibrations selon le premier mode de réalisation ;
- la figure 5 est une vue schématique éclatée et en perspective de la partie de l'actionneur électromécanique illustrée à la figure 4 ;
- la figure 6 est une vue schématique en perspective d'un organe mécanique de filtrage de vibrations du module mécanique de filtrage de vibrations illustré aux figures 4 et 5 ;
- la figure 7 est une vue schématique en coupe de l'organe mécanique de filtrage de vibrations illustré à la figure 6 ;
- la figure 8 est une vue schématique de côté de l'organe mécanique de filtrage de vibrations illustré aux figures 6 et 7 ;
- la figure 9 est une vue schématique en perspective d'un support de couple de l'actionneur électromécanique illustré aux figures 4 et 5 ;
- la figure 10 est une vue schématique en perspective d'une bague de l'actionneur électromécanique illustré aux figures 4 et 5 ;
- la figure 11 est une vue analogue à la figure 4 illustrant un module mécanique de filtrage de vibrations selon un deuxième mode de réalisation de l'invention ;
- la figure 12 est une vue analogue à la figure 6 illustrant un organe mécanique de filtrage de vibrations d'un module mécanique de filtrage de vibrations selon un troisième de réalisation de l'invention ; et
- la figure 13 est une vue schématique en coupe de l'organe mécanique de filtrage de vibrations illustré à la figure 12.

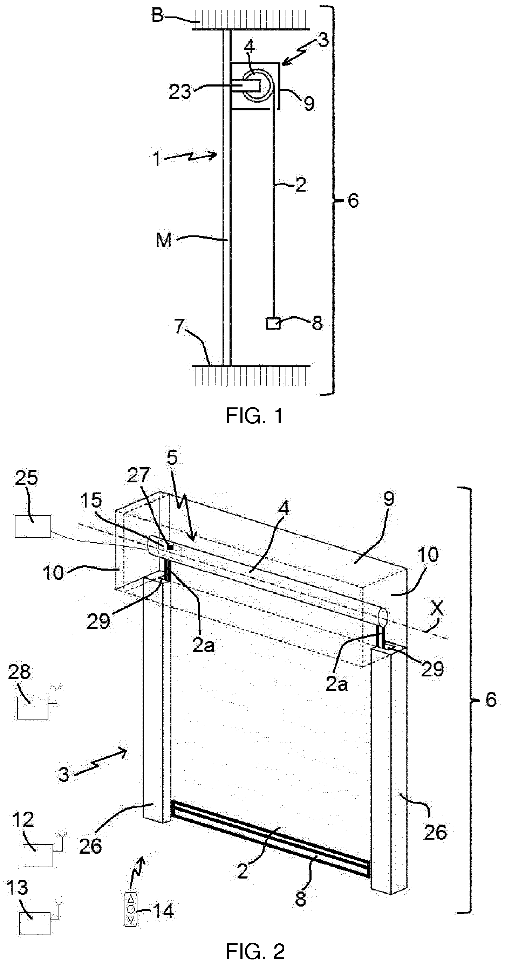

On décrit tout d'abord, en référence aux figures 1 et 2, une installation 6 conforme à l'invention et installée dans un bâtiment B comportant une ouverture 1, fenêtre ou porte, équipée d'un écran 2 appartenant à un dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut comprendre un store, notamment une toile, enroulable, un store plissé ou à lames. Le dispositif d'occultation 3 peut également comprendre un volet roulant ou encore un portail roulant. La présente invention s'applique à tous les types de dispositif d'occultation.

On décrit, en référence aux figures 1 et 2, un store enroulable conforme à un mode de réalisation de l'invention.

Le dispositif d'occultation 3 comprend un tube d'enroulement 4 et un dispositif d'entraînement motorisé 5. Le dispositif d'entraînement motorisé 5 comprend un actionneur électromécanique 11.

L'écran 2 du dispositif d'occultation 3 est enroulé sur le tube d'enroulement 4 entraîné par le dispositif d'entraînement motorisé 5. Ainsi, l'écran est mobile entre une position enroulée, en particulier haute, et une position déroulée, en particulier basse.

L'écran 2 du dispositif d'occultation 3 est un écran de fermeture, d'occultation et/ou de protection solaire, s'enroulant et se déroulant autour du tube d'enroulement 4, dont le diamètre intérieur est sensiblement supérieur au diamètre externe de l'actionneur électromécanique 11, de sorte que l'actionneur électromécanique 11 puisse être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, dans une configuration assemblée du dispositif d'occultation 3.

Ainsi, le tube d'enroulement 4 est maintenu par l'intermédiaire des supports 23. Un seul des supports 23 est représenté à la figure 1. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

En variante, représentée à la figure 2, le tube d'enroulement 4 est maintenu par l'intermédiaire du caisson 9, en particulier par l'intermédiaire des joues 10 du caisson 9.

Avantageusement, le dispositif d'occultation 3 peut également comprendre deux coulisses latérales 26, comme illustré à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est par exemple de type tubulaire. Celui-ci permet de mettre en rotation le tube d'enroulement 4 autour d'un axe de rotation X, de sorte à dérouler ou enrouler l'écran 2 du dispositif d'occultation 3.

Ainsi, l'écran 2 peut être enroulé et déroulé sur le tube d'enroulement 4. Dans l'état monté, l'actionneur électromécanique 11 est inséré dans le tube d'enroulement 4.

Avantageusement, le dispositif d'occultation 3 comprend également une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre un bord d'un caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée en liaison filaire ou non filaire avec l'unité de commande centrale 13.

Avantageusement, l'unité de commande centrale 13 peut piloter l'unité de commande locale 12, ainsi que d'autres unités de commande locales similaires et réparties dans le bâtiment.

Avantageusement, l'unité de commande centrale 13 peut être en communication avec une station météorologique disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12, l'unité de commande centrale 13 ou la télécommande 14.

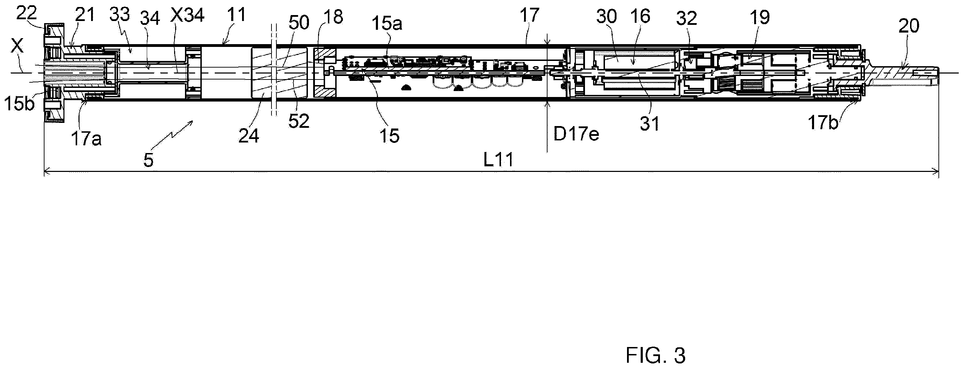

On décrit à présent, plus en détail et en référence à la figure 3, l'actionneur électromécanique 11 appartenant à l'installation 6 des figures 1 et 2.

L'actionneur électromécanique 11 comprend un moteur électrique 16. Le moteur électrique 16 comprend un rotor 31 et un stator 30, positionnés de manière coaxiale autour de l'axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Avantageusement, l'unité électronique de contrôle 15 comprend également un module de communication 27, comme illustré à la figure 2, en particulier de réception d'ordres de commande, les ordres de commande étant émis par un émetteur d'ordres, tel que la télécommande 14 destinée à commander l'actionneur électromécanique 11 ou l'une des unités de commande locale 12 ou centrale 13.

Préférentiellement, le module de communication 27 de l'unité électronique de contrôle 15 est de type sans fil. En particulier, le module de communication 27 est configuré pour recevoir des ordres de commande radioélectriques.

Le module de communication 27 peut également permettre la réception d'ordres de commande transmis par des moyens filaires.

L'unité de commande centrale 13, l'unité de commande locale 12 ou l'unité électronique de contrôle 15 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

Avantageusement, l'actionneur électromécanique 11 est alimenté en énergie électrique au moyen d'au moins une batterie 24.

Ici, l'actionneur électromécanique 11 comprend un câble d'alimentation électrique 18 permettant son alimentation en énergie électrique, en particulier à partir de la batterie 24.

Avantageusement, la batterie 24 est de type rechargeable et alimente en énergie électrique l'actionneur électromécanique 11.

Avantageusement, la batterie 24 est disposée à l'intérieur du carter 17 de l'actionneur électromécanique 11.

Avantageusement, la batterie 24 comprend un ou plusieurs éléments de stockage d'énergie, non représentés. Les éléments de stockage d'énergie de la batterie 24 peuvent être, notamment, des accumulateurs rechargeables ou encore des piles rechargeables.

Avantageusement, le dispositif d'entraînement motorisé 5 et, en particulier, l'unité électronique de contrôle 15, comprend des éléments de chargement configurés pour charger la batterie 24 à partir de l'énergie électrique fournie par une source d'alimentation électrique externe 25, telle qu'illustrée à la figure 2.

A titre d'exemple nullement limitatif, la source d'alimentation électrique externe 25 est un chargeur pouvant être branché sur une prise électrique murale, de sorte à recharger la batterie 24 à partir d'un réseau d'alimentation électrique du secteur.

En variante, non représentée, la source d'alimentation électrique externe 25 est une batterie auxiliaire, de sorte à recharger la batterie 24.

Ainsi, la batterie 24 peut être rechargée au moyen de la batterie auxiliaire formant la source d'alimentation électrique externe 25, en particulier dans le cas où le dispositif d'occultation 3 est éloigné d'une prise électrique murale.

Avantageusement, l'unité électronique de contrôle 15 comprend une première carte électronique 15a et une deuxième carte électronique 15b.

Avantageusement, la première carte électronique 15a est configurée pour contrôler le moteur électrique 16. En outre, la deuxième carte électronique 15b est configurée pour, notamment, permettre la recharge de la batterie 24, au moyen d'un connecteur électrique, non représenté, et, éventuellement, accéder à des fonctions de paramétrage et/ou de configuration de l'actionneur électromécanique 11, au moyen d'éléments de sélection et, éventuellement, d'affichage, non représentés.

Ici et de manière nullement limitative, les éléments de chargement sont disposés au niveau de la deuxième carte électronique 15b.

En variante, non représentée, l'actionneur électromécanique 11 est alimenté en énergie électrique par un réseau d'alimentation en énergie électrique du secteur.

L'actionneur électromécanique 11 comprend un carter 17, en particulier tubulaire.

Ici, le carter 17 de l'actionneur électromécanique 11 est de forme cylindrique, notamment de révolution.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend également un réducteur 19 et un arbre de sortie 20.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend également un frein 32.

A titre d'exemples nullement limitatifs, le frein 32 peut être un frein à ressort, un frein à came ou un frein électromagnétique.

Avantageusement, le moteur électrique 16, le réducteur 19 et, éventuellement, le frein 32 sont disposés à l'intérieur du carter 17 de l'actionneur électromécanique 11.

Avantageusement, l'actionneur électromécanique 11 peut également comprendre un dispositif de détection de fin de course et/ou d'obstacle, pouvant être mécanique ou électronique.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne, non représentée, insérée autour d'une première extrémité 17a du carter 17 de l'actionneur électromécanique 11. La couronne permet ainsi de réaliser un palier. La deuxième liaison pivot, non représentée, est réalisée au niveau d'une deuxième extrémité du tube d'enroulement 4.

Avantageusement, l'actionneur électromécanique 11 comprend un support de couple 21, pouvant également être appelé tête d'actionneur 21. Le support de couple 21 est disposé au niveau de la première extrémité 17a du carter 17 de l'actionneur électromécanique 11, dans une configuration assemblée de l'actionneur électromécanique 11. Le support de couple 21 permet de reprendre les efforts exercés par l'actionneur électromécanique 11 et d'assurer la reprise des efforts exercés par l'actionneur électromécanique 11, en particulier le couple exercé par l'actionneur électromécanique 11, par la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 de l'actionneur électromécanique 11 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11, en particulier l'extrémité 17a du carter 17 recevant la couronne. La couronne constitue, autrement dit est configurée pour constituer, un palier de guidage en rotation du tube d'enroulement 4, dans la configuration assemblée du dispositif d'occultation 3.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen du câble d'alimentation électrique 18.

Avantageusement, l'unité électronique de contrôle 15 peut être disposée au moins en partie à l'intérieur du carter 17 de l'actionneur électromécanique 11.

Par ailleurs, l'unité électronique de contrôle 15 peut être disposée au moins en partie à l'extérieur du carter 17 de l'actionneur électromécanique 11 et, en particulier, montée sur l'un des deux supports 23, sur l'une des joues 10 du caisson 9 ou dans le support de couple 21.

Ici, la première carte électronique 15a de l'unité électronique de contrôle 15 est disposée à l'intérieur du carter 17 de l'actionneur électromécanique 11. En outre, la deuxième carte électronique 15b est disposée à l'intérieur du support de couple 21 de l'actionneur électromécanique 11.

Ici et comme illustré à la figure 3, le support de couple 21 comprend un couvercle 22. En outre, la deuxième carte électronique 15b est disposée à l'intérieur d'un logement formé entre le support de couple 21 et le couvercle 22.

Avantageusement, le support de couple 21 comprend au moins un bouton, non représenté.

Ce ou ces boutons peuvent permettre de réaliser un réglage de l'actionneur électromécanique 11 au travers d'un ou plusieurs modes de configuration, d'appairer une ou plusieurs unités de commande 12, 13, 14, de réinitialiser un ou plusieurs paramètres, pouvant être, par exemple, une position de fin de course, de réinitialiser la ou les unités de commande 12, 13, 14 appairées ou encore de commander le déplacement de l'écran 2.

Ici, le support de couple 21 comprend un seul bouton.

Le nombre de boutons du support de couple n'est pas limitatif et peut être différent. Il peut être, notamment, supérieur ou égal à deux.

Avantageusement, le support de couple 21 comprend au moins un dispositif d'éclairage, non représenté, de sorte à permettre une indication visuelle, pouvant être, par exemple, un état de charge de la batterie 24.

Avantageusement, le dispositif d'éclairage comprend au moins une source d'éclairage, non représentée, en particulier une diode électroluminescente, montée sur la deuxième carte électronique 15b et, éventuellement, un capot transparent ou translucide et/ou un guide de lumière, pour permettre le passage de la lumière émise par la source d'éclairage.

Ici, le support de couple 21 comprend un seul dispositif d'éclairage.

Le nombre de dispositifs d'éclairage n'est pas limitatif et peut être différent. Il peut être, notamment, supérieur ou égal à deux.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison, non représenté, relié au tube d'enroulement 4. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

L'actionneur électromécanique 11 comprend un module mécanique de filtrage de vibrations 33. En outre, le module mécanique de filtrage de vibrations 33 est monté au moins en partie à l'intérieur du carter 17 de l'actionneur électromécanique 11.

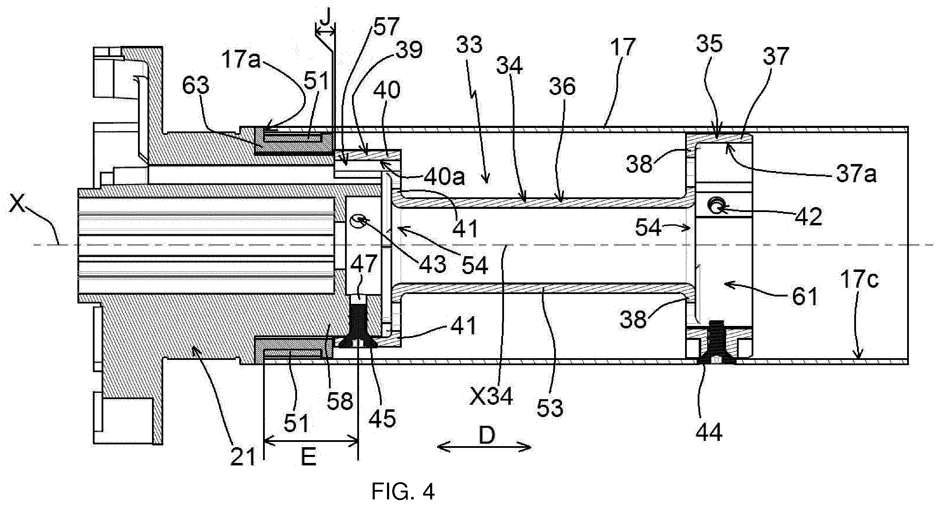

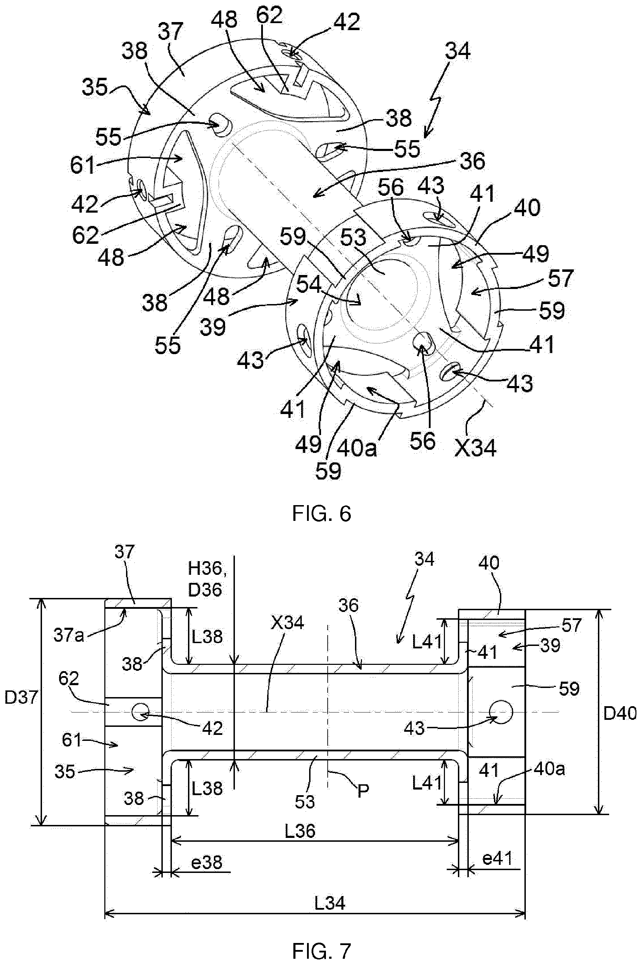

On décrit à présent, en référence aux figures 4 à 10, le module mécanique de filtrage de vibrations 33 de l'actionneur électromécanique 11, illustré à la figure 3, selon le premier mode de réalisation de l'invention.

Le module mécanique de filtrage de vibrations 33 comprend au moins un organe mécanique de filtrage de vibrations 34. L'organe mécanique de filtrage de vibrations 34 est monobloc et s'étend suivant un axe longitudinal X34 destiné à être aligné sur l'axe de rotation X du rotor 31 du moteur électrique 16.

L'organe mécanique de filtrage de vibrations 34 comprend au moins une première portion d'extrémité 35 et une portion intermédiaire 36. La première portion d'extrémité 35 comprend un premier anneau 37. En outre, la portion intermédiaire 36 est reliée à la première portion d'extrémité 35. Le premier anneau 37 de la première portion d'extrémité 35 présente un premier diamètre D37 supérieur à une dimension H36 de la portion intermédiaire 36 la plus grande et mesurée dans un plan P orthogonal à l'axe longitudinal X34.

La première portion d'extrémité 35 comprend, en outre, une pluralité de premiers bras 38. Chaque premier bras 38 relie la portion intermédiaire 36 au premier anneau 37.

Ainsi, une telle structure de l'organe mécanique de filtrage de vibrations 34 est simplifiée, en particulier par rapport à l'état de la technique connu du document WO 2018/104488 A1, et permet de garantir une réduction d'une transmission de vibrations à partir de l'actionneur électromécanique 11 vers l'installation 6, tout en minimisant les coûts d'obtention du module mécanique de filtrage de vibrations 33 et donc de l'actionneur électromécanique 11.

De cette manière, l'industrialisation d'un tel module mécanique de filtrage de vibrations 33 est facilitée.

La structure de l'organe mécanique de filtrage de vibrations 34 permet d'obtenir une déformation de la portion intermédiaire 36, ainsi que d'obtenir un rotulage au niveau de la jonction entre la portion intermédiaire 36 et la première portion d'extrémité 35.

La structure de l'organe mécanique de filtrage de vibrations 34 permet également de minimiser la longueur L34 de ce dernier et ainsi d'obtenir un module mécanique de filtrage de vibrations 34 compact, de sorte à minimiser la longueur L11 de l'actionneur électromécanique 11.

Avantageusement, la longueur L34 de l'organe mécanique de filtrage de vibrations 34 est déterminée de sorte à optimiser l'absorption de vibrations.

En outre, les premiers bras 38 de la première portion d'extrémité 35 permettent de garantir une raideur en torsion élevée autour de l'axe de rotation X et une raideur en flexion faible de l'organe mécanique de filtrage de vibrations 34.

Par ailleurs, un tel module mécanique de filtrage de vibrations 33 est particulièrement adapté pour des actionneurs électromécaniques comprenant un carter ayant un faible diamètre D17e, en particulier extérieur, pouvant être, par exemple, de l'ordre de 20 millimètres à 60 millimètres et, préférentiellement, de l'ordre de 25 millimètres à 30 millimètres.

La dimension H36 de la portion intermédiaire 36 la plus grande et mesurée dans le plan P orthogonal à l'axe longitudinal X34 correspond à une hauteur.

Ici, le module mécanique de filtrage de vibrations 33 comprend un seul organe mécanique de filtrage de vibrations 34.

L'emploi d'un seul organe mécanique de filtrage de vibrations 34 est dû au poids de l'actionneur électromécanique 11 et, en particulier, à l'intégration de la batterie 24 à l'intérieur du carter 17.

Dans ce premier mode de réalisation, la portion intermédiaire 36 présente une section de forme circulaire, dans le plan P orthogonal à l'axe longitudinal X34.

Ainsi, la hauteur H36 de la portion intermédiaire 36, dans le plan P orthogonal à l'axe longitudinal X34, correspond à un diamètre D36 de la portion intermédiaire 36.

Avantageusement, l'organe mécanique de filtrage de vibrations 34 comprend, en outre, au moins une deuxième portion d'extrémité 39. La deuxième portion d'extrémité 39 est opposée à la première portion d'extrémité 35, suivant l'axe longitudinal X34. La deuxième portion d'extrémité 39 comprend un deuxième anneau 40. La portion intermédiaire 36 est reliée à la deuxième portion d'extrémité 39 et disposée entre les première et deuxième portions d'extrémité 35, 39. Le deuxième anneau 40 de la deuxième portion d'extrémité 39 présente un deuxième diamètre D40 supérieur à la dimension H36 de la portion intermédiaire 36 la plus grande et mesurée dans le plan P orthogonal à l'axe longitudinal X34. En outre, la deuxième portion d'extrémité 39 comprend, en outre, une pluralité de deuxièmes bras 41. Chaque deuxième bras 41 relie la portion intermédiaire 36 au deuxième anneau 40.

Ainsi, la structure de l'organe mécanique de filtrage de vibrations 34 permet également d'obtenir un rotulage au niveau de la jonction entre la portion intermédiaire 36 et la deuxième portion d'extrémité 39.

En outre, les deuxièmes bras 41 de la deuxième portion d'extrémité 39 permettent de garantir une raideur en torsion élevée et une raideur en flexion faible de l'organe mécanique de filtrage de vibrations 34.

Ici, la portion intermédiaire 36 peut également être appelée poutre centrale. La première portion d'extrémité 35 peut également être appelée premier flasque. La deuxième portion d'extrémité 39 peut également être appelée deuxième flasque. Le premier anneau 37 de la première portion d'extrémité 35 peut également être appelé première jante. En outre, le deuxième anneau 40 de la deuxième portion d'extrémité 39 peut également être appelé deuxième jante.

Avantageusement, l'organe mécanique de filtrage de vibrations 34 est réalisé dans une matière plastique. Il peut s'agir, par exemple, d'un polyacétal, notamment d'un polyoxyméthylène, de sigle POM.

Cet organe mécanique de filtrage de vibrations 34 est plus facile à injecter que celui décrit dans le document WO 2018/104488 A1.

Ici, la première portion d'extrémité 35 comprend trois premiers bras 38. En outre, la deuxième portion d'extrémité 39 comprend trois deuxièmes bras 41.

Le nombre de premiers bras et le nombre de deuxièmes bras ne sont pas limitatifs et peuvent être différents. Chaque nombre de premiers et de deuxièmes bras peut être supérieur ou égal à deux et, notamment, au nombre de six.

Dans le premier mode de réalisation, le deuxième diamètre D40 du deuxième anneau 40 est inférieur au premier diamètre D37 du premier anneau 37.

Dans le premier mode de réalisation, l'organe mécanique de filtrage de vibrations 34 est monté intégralement à l'intérieur du carter 17 de l'actionneur électromécanique 11.

Avantageusement, la première portion d'extrémité 35 de l'organe mécanique de filtrage de vibrations 34 comprend également une première cavité 61.

Avantageusement, la première portion d'extrémité 35 de l'organe mécanique de filtrage de vibrations 34 comprend au moins un premier élément en relief 62 s'étendant à partir d'une surface interne 37a du premier anneau 37 en direction de l'axe longitudinal X34, autrement dit s'étendant à l'intérieur de la première cavité 61 de la première portion d'extrémité 35.

Ici, la première portion d'extrémité 35 de l'organe mécanique de filtrage de vibrations 34 comprend trois premiers éléments en relief 62 disposés avec un angle de 120° l'un par rapport à l'autre, autour de l'axe de rotation X et de l'axe longitudinal X34.

Le nombre et la position angulaire des premiers éléments en relief ne sont pas limitatifs et peuvent être différents. Les premiers éléments en relief peuvent être au nombre de un ou plus et, par exemple, au nombre de deux et disposés avec un angle de 180° l'un par rapport à l'autre, autour de l'axe de rotation et de l'axe longitudinal.

Avantageusement, la deuxième portion d'extrémité 39 de l'organe mécanique de filtrage de vibrations 34 comprend une deuxième cavité 57. En outre, la deuxième cavité 57 de la deuxième portion d'extrémité 39 coopère, autrement dit est configurée pour coopérer, avec le support de couple 21 et, plus particulièrement, un arbre 58 du support de couple 21, dans la configuration assemblée de l'actionneur électromécanique 11.

Ainsi, l'arbre 58 du support de couple 21 est logé à l'intérieur de la deuxième cavité 57 de la deuxième portion d'extrémité 39 de l'organe mécanique de filtrage de vibrations 34, dans la configuration assemblée de l'actionneur électromécanique 11.

De cette manière, la deuxième portion d'extrémité 39 de l'organe mécanique de filtrage de vibrations 34 est maintenue au support de couple 21 par emboîtement, dans la configuration assemblée de l'actionneur électromécanique 11.

Avantageusement, la deuxième portion d'extrémité 39 de l'organe mécanique de filtrage de vibrations 34 comprend au moins un deuxième élément en relief 59 s'étendant à partir d'une surface interne 40a du deuxième anneau 40 en direction de l'axe longitudinal X34, autrement dit s'étendant à l'intérieur de la deuxième cavité 57 de la deuxième portion d'extrémité 39. L'arbre 58 du support de couple 21 comprend au moins un élément en creux 60. En outre, le ou l'un des deuxièmes éléments en relief 59 de la deuxième portion d'extrémité 39 de l'organe mécanique de filtrage de vibrations 34 coopère, autrement dit est configuré pour coopérer, avec le ou l'un des éléments en creux 60 de l'arbre 58 du support de couple 21, dans la configuration assemblée de l'actionneur électromécanique 11.

Le ou les deuxièmes éléments en relief 59 de la deuxième portion d'extrémité 39 peuvent également être appelés nervures ou dents.

Le ou les éléments en creux 60 de l'arbre 58 du support de couple 21 peuvent également être appelés rainures ou logements.

Ici, la deuxième portion d'extrémité 39 de l'organe mécanique de filtrage de vibrations 34 comprend trois deuxièmes éléments en relief 59 disposés avec un angle de 120° l'un par rapport à l'autre, autour de l'axe de rotation X et de l'axe longitudinal X34. En outre, l'arbre 58 du support de couple 21 comprend trois éléments en creux 60, disposés avec un angle de 120° l'un par rapport à l'autre, autour de l'axe de rotation X.

Le nombre et la position angulaire des éléments en relief et des éléments en creux ne sont pas limitatifs et peuvent être différents. Les éléments en relief et les éléments en creux peuvent être au nombre de un ou plus et, par exemple, au nombre de deux et disposés avec un angle de 180° l'un par rapport à l'autre, autour de l'axe de rotation.

Ainsi, le ou chaque deuxième élément en relief 59 de la deuxième portion d'extrémité 39 de l'organe mécanique de filtrage de vibrations 34 est logé à l'intérieur du ou de l'un des éléments en creux 60 de l'arbre 58 du support de couple 21, dans la configuration assemblée de l'actionneur électromécanique 11.

De cette manière, la deuxième portion d'extrémité 39 de l'organe mécanique de filtrage de vibrations 34 est bloquée en rotation par rapport au support de couple 21, dans la configuration assemblée de l'actionneur électromécanique 11.

Avantageusement, le ou l'un des deuxièmes éléments en relief 59 de la deuxième portion d'extrémité 39 de l'organe mécanique de filtrage de vibrations 34 coopère, autrement dit est configuré pour coopérer, avec le ou l'un des éléments en creux 60 de l'arbre 58 du support de couple 21, dans la configuration assemblée de l'actionneur électromécanique 11, de sorte à bloquer en rotation la deuxième portion d'extrémité 39 de l'organe mécanique de filtrage de vibrations 34 par rapport au support de couple 21, alors que la deuxième cavité 57 de la deuxième portion d'extrémité 39 de l'organe mécanique de filtrage de vibrations 34 est engagée, autrement dit configurée pour être engagée, sur l'arbre 58 du support de couple 21 par un coulissement axial D, suivant l'axe de rotation X, dans la configuration assemblée de l'actionneur électromécanique 11.

Ainsi, la deuxième portion d'extrémité 39 de l'organe mécanique de filtrage de vibrations 34 est en prise avec le support de couple 21, dans la configuration assemblée de l'actionneur électromécanique 11. La coopération du ou des deuxièmes éléments en relief 59 de la deuxième portion d'extrémité 39 de l'organe mécanique de filtrage de vibrations 34 avec le ou les éléments en creux 60 de l'arbre 58 du support de couple 21 permet d'engager la deuxième cavité 57 de la deuxième portion d'extrémité 39 de l'organe mécanique de filtrage de vibrations 34 sur l'arbre 58 du support de couple 21, par coulissement axial D, tout en garantissant un blocage en rotation entre la deuxième portion d'extrémité 39 de l'organe mécanique de filtrage de vibrations 34 et le support de couple 21.

Avantageusement, la première cavité 61 de la première portion d'extrémité 35 est semblable à la deuxième cavité 57 de la deuxième portion d'extrémité 39.

Avantageusement, dans la configuration assemblée de l'actionneur électromécanique 11, la première portion d'extrémité 35 de l'organe mécanique de filtrage de vibrations 34 est fixée au carter 17 de l'actionneur électromécanique 11 au moyen de premiers éléments de fixation 44, en particulier au nombre de trois disposés avec un angle de 120° l'un par rapport à l'autre, autour de l'axe de rotation X.

Avantageusement, dans la configuration assemblée de l'actionneur électromécanique 11, la deuxième portion d'extrémité 39 de l'organe mécanique de filtrage de vibrations 34 est fixée au support de couple 21 au moyen de deuxièmes éléments de fixation 45, en particulier au nombre de trois disposés avec un angle de 120° l'un par rapport à l'autre, autour de l'axe de rotation X.

Ainsi, l'organe mécanique de filtrage de vibrations 34 est assemblé du côté de la première extrémité 17a du carter 17 de l'actionneur électromécanique 11, au niveau de laquelle est assemblée le support de couple 21.

Ici, les premiers et deuxièmes éléments de fixation 44, 45 sont des vis de fixation.

Le type et le nombre de premiers et deuxièmes éléments de fixation ne sont pas limitatifs. Il peut s'agir, notamment, de rivets. Ces éléments de fixation peuvent être, par exemple, au nombre de deux ou plus.

Ici et comme illustré à la figure 3, l'organe mécanique de filtrage de vibrations 34 est disposé entre le support de couple 21 et le moteur électrique 16 et, plus particulièrement, entre le support de couple 21 et la batterie 24.

Avantageusement, chacun des premier et deuxième anneaux 37, 40 comprend respectivement une pluralité de premiers et de deuxièmes trous de fixation 42, 43, en particulier au nombre de trois disposés avec un angle de 120° l'un par rapport à l'autre, autour de l'axe de rotation X et de l'axe longitudinal X34.

Le nombre et la position angulaire des premiers et des deuxièmes trous de fixation ne sont pas limitatifs et peuvent être différents. Les premiers et les deuxièmes trous de fixation peuvent être au nombre de deux ou plus et, par exemple, au nombre de deux et disposés avec un angle de 180° l'un par rapport à l'autre, autour de l'axe de rotation et de l'axe longitudinal.

Avantageusement, les premiers trous de fixation 42 sont ménagés au travers des premiers éléments en relief 62 de la première portion d'extrémité 35 et, plus particulièrement, du premier anneau 37. En outre, les deuxièmes trous de fixation 43 sont ménagés au travers des deuxièmes éléments en relief 59 de la deuxième portion d'extrémité 39 et, plus particulièrement, du deuxième anneau 40.

Ainsi, les premiers et deuxièmes trous de fixation 42, 43 sont ménagés respectivement dans les premier et deuxième anneaux 37, 40, au niveau de zones de ceux-ci présentant un renforcement et/ou une surépaisseur, de sorte à garantir la tenue de la fixation, d'une part, entre la première portion d'extrémité 35 et le carter 17 et, d'autre part, entre la deuxième portion d'extrémité 39 et le support de couple 21.

Avantageusement, le carter 17 et le support de couple 21 de l'actionneur électromécanique 11 comprennent, en outre, respectivement des trous de fixation 46, 47, en particulier au nombre de trois disposés avec un angle de 120° l'un par rapport à l'autre, autour de l'axe de rotation X.

Ainsi, dans la configuration assemblée de l'actionneur électromécanique 11, les premiers éléments de fixation 44 coopèrent, autrement dit sont configurés pour coopérer, avec les premiers trous de fixation 42 du premier anneau 37 et les trous de fixation 46 du carter 17, pouvant également être appelés premiers trous de fixation 46 du carter 17. En outre, dans la configuration assemblée de l'actionneur électromécanique 11, les deuxièmes éléments de fixation 45 coopèrent, autrement dit sont configurés pour coopérer, avec les deuxièmes trous de fixation 43 et les trous de fixation 47 du support de couple 21.

Avantageusement, dans la configuration assemblée de l'actionneur électromécanique 11, la fixation de la deuxième portion d'extrémité 39 de l'organe mécanique de filtrage de vibrations 34 sur l'arbre 58 du support de couple 21 au moyen des deuxièmes éléments de fixation 45 est mise en oeuvre à une distance E prédéterminée par rapport à la première extrémité 17a du carter 17.

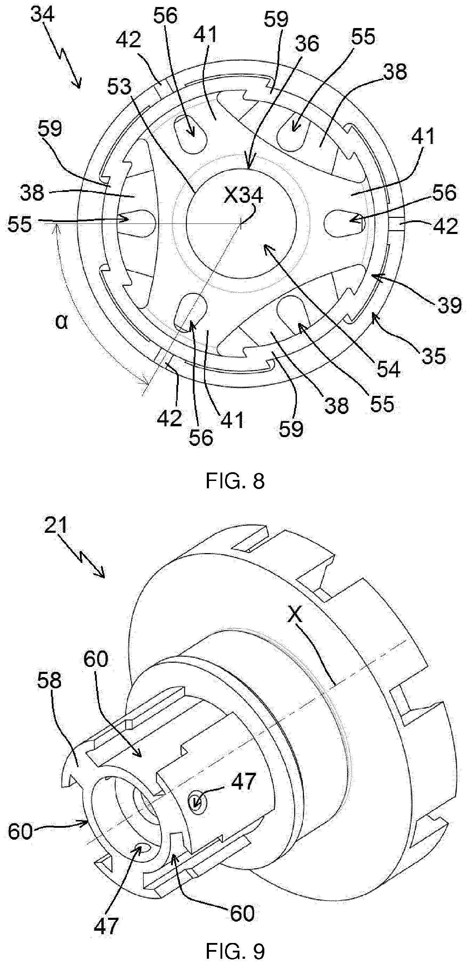

Avantageusement, les premiers bras 38 de la première portion d'extrémité 35 sont décalés angulairement par rapport aux deuxièmes bras 40 de la deuxième portion d'extrémité 39, autour de l'axe longitudinal X34, d'une valeur angulaire α prédéterminée, comme illustré à la figure 8.

Ainsi, le décalage angulaire des premiers bras 38 par rapport aux deuxièmes bras 40, autour de l'axe longitudinal X34, permet de garantir une symétrie, quelle que soit la position angulaire de montage de l'organe mécanique de filtrage de vibrations 34 par rapport au carter 17 et, dans le cas présent, au support de couple 21.

De cette manière, le décalage angulaire des premiers bras 38 par rapport aux deuxièmes bras 40, autour de l'axe longitudinal X34, permet de garantir une symétrie des efforts par rapport au carter 17 et, dans le cas présent, au support de couple 21, lors de l'entraînement en rotation du tube d'enroulement 4 par l'actionneur électromécanique 11.

Ici, la valeur angulaire α prédéterminée du décalage angulaire, autour de l'axe longitudinal X34, des premiers bras 38 par rapport aux deuxièmes bras 40 est de l'ordre de 60°.

Avantageusement, la valeur angulaire α prédéterminée est égale à la moitié du décalage angulaire entre deux premiers bras 38 adjacents et/ou entre deux deuxièmes bras 40 adjacents.

Avantageusement, la première portion d'extrémité 35 comprend au moins un premier dégagement 48 entre le premier anneau 37 et l'un des premiers bras 38 pour le passage d'au moins un câble 18, 50, 52.

Ici, la première portion d'extrémité 35 comprend trois premiers dégagements 48 entre le premier anneau 37 et les trois premiers bras 38, pour le passage d'un ou plusieurs câbles 18, 50, 52. Chaque premier dégagement 48 correspond à une ouverture formée entre deux premiers bras 38 adjacents et le premier anneau 37.

Avantageusement, la deuxième portion d'extrémité 39 comprend au moins un deuxième dégagement 49 entre le deuxième anneau 40 et l'un des deuxièmes bras 41 pour le passage dudit au moins un câble 18, 50, 52.

Ici, la deuxième portion d'extrémité 39 comprend trois deuxièmes dégagements 49 entre le deuxième anneau 40 et les trois deuxièmes bras 41, pour le passage d'un ou plusieurs câbles 18, 50, 52. Chaque deuxième dégagement 49 correspond à une ouverture formée entre deux deuxièmes bras 41 adjacents et le deuxième anneau 40.

Avantageusement, la portion intermédiaire 36 est réalisée au moyen d'un tube creux 53.

Avantageusement, le tube creux 53 formant la portion intermédiaire 36 est débouchant à chacune de ses extrémités.

Ainsi, une ouverture 54 est ménagée à chacune des extrémités du tube creux 53 formant la portion intermédiaire 36.

Avantageusement, le tube creux 53 formant la portion intermédiaire 36 peut permettre le passage d'au moins un câble 18, 50, 52.

En pratique, le ou les câbles 18, 50, 52 traversant un premier dégagement 48 de la première portion d'extrémité 35, un deuxième dégagement 49 de la deuxième portion d'extrémité 39 ou le tube creux 53 formant la portion intermédiaire 36 peuvent être, notamment, un câble d'alimentation en énergie électrique 18, un câble de communication de données 50 ou un câble d'antenne 52.

Il peut s'agir du câble d'antenne 52 dans le cas où le module de communication 27 de l'unité électronique de contrôle 15 est de type sans fil, en particulier radioélectrique, de sorte à pouvoir disposer au moins une partie du câble d'antenne 52 à l'extérieur du carter 17, dans la configuration assemblée de l'actionneur électromécanique 11.

Dans la configuration assemblée de l'actionneur électromécanique 11, le ou les câbles 18, 50, 52 s'étendent à l'intérieur du carter 17.

Avantageusement, au moins l'un des premiers bras 38 comprend au moins un premier évidement 55.

Ainsi, le ou les premiers évidements 55 du ou des premiers bras 38 peut permettre de réduire la rigidité du ou des premiers bras 38, ainsi que de réduire le poids de l'organe mécanique de filtrage de vibrations 34.

Ici, chacun des premiers bras 38 comprend un seul premier évidement 55.

Le nombre de premiers évidements du ou des premiers bras n'est pas limitatif et peut être différent. Il peut être, notamment, supérieur ou égal à deux.

Avantageusement, au moins l'un des deuxièmes bras 41 comprend au moins un deuxième évidement 56.

Ainsi, le ou les deuxièmes évidements 56 du ou des deuxièmes bras 41 peut permettre de réduire la rigidité du ou des deuxièmes bras 41, ainsi que de réduire le poids de l'organe mécanique de filtrage de vibrations 34.

Ici, chacun des deuxièmes bras 41 comprend un seul deuxième évidement 56.

Le nombre de deuxièmes évidements du ou des deuxièmes bras n'est pas limitatif et peut être différent. Il peut être, notamment, supérieur ou égal à deux.

Avantageusement, au moins l'un des premiers évidements 55 ou au moins l'un des deuxièmes évidements 56 peut permettre le passage d'au moins l'un des câbles 18, 50, 52.

En variante, non représentée, chaque premier bras 38 et chaque deuxième bras 41 peut être dépourvu d'un évidement 55, 56.

En variante, non représentée, la portion intermédiaire 36 et, plus particulièrement, le tube creux 53 formant la portion intermédiaire 36 comprend des évidements.

Avantageusement, l'actionneur électromécanique 11 comprend une bague 63. En outre, la bague 63 est montée autour de l'arbre 58 du support de couple 21.

Ainsi, la bague 63 permet ou autrement dit est configurée pour arrêter une déformation angulaire de l'organe mécanique de filtrage de vibrations 34, correspondant à un fluage de ce dernier, en fonction de conditions de fonctionnement de l'organe mécanique de filtrage de vibrations 34, telles que, notamment, la température ambiante et le couple fourni par l'actionneur électromécanique 11 lors de sa mise en fonctionnement.

Préférentiellement, la bague 63 est montée libre en rotation autour de l'arbre 58 du support de couple 21.

Avantageusement, dans la configuration assemblée de l'actionneur électromécanique 11, l'actionneur électromécanique 11 comprend, en outre, au moins un élément viscoélastique 51 disposé entre la deuxième portion d'extrémité 39 de l'organe mécanique de filtrage de vibrations 34, en particulier le deuxième anneau 40, et la bague 63 et/ou entre le carter 17 de l'actionneur électromécanique 11 et la bague 63 et/ou entre le support de couple 21 et la bague 63.

Ainsi, le ou les éléments viscoélastiques 51 disposés entre la deuxième portion d'extrémité 39 de l'organe mécanique de filtrage de vibrations 34, en particulier le deuxième anneau 40, et la bague 63 et/ou entre le carter 17 de l'actionneur électromécanique 11 et la bague 63 et/ou entre le support de couple 21 et la bague 63 permettent d'empêcher un claquement du carter 17 sur le support de couple 21, dans la configuration assemblée de l'actionneur électromécanique 11 et lors de la mise en fonctionnement de celui-ci.

Avantageusement, le ou les éléments viscoélastiques 51 sont disposés au niveau d'une surface intérieure 63a de la bague 63 et/ou d'une surface extérieure 63b de la bague 63 et/ou d'au moins l'une des surfaces latérales 63c de la bague 63.

Ainsi, dans un tel cas, la bague 63 forme une armature rigide 63d et le ou les éléments viscoélastiques 51 forment une partie souple 63e, où cette partie souple 63e est rapportée sur l'armature rigide 63d.

De cette manière, la partie souple 63e peut être assemblée à l'intérieur et/ou autour de l'armature rigide 63d.

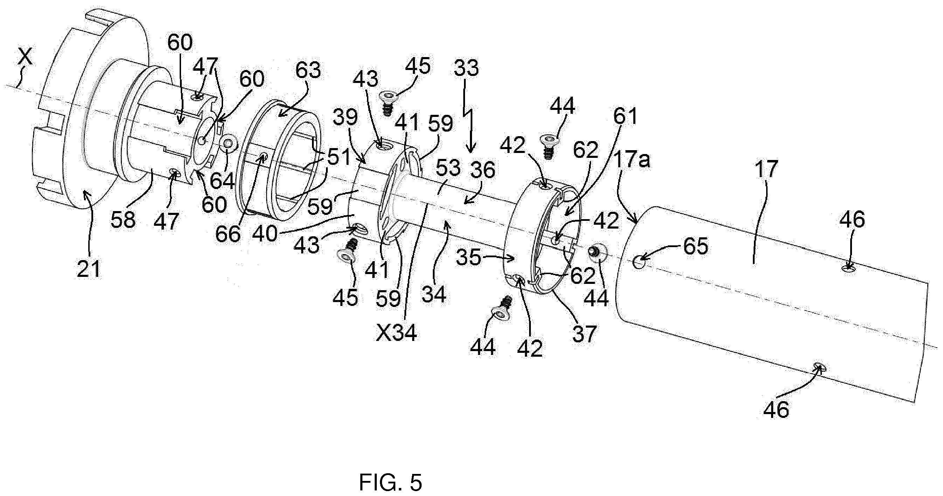

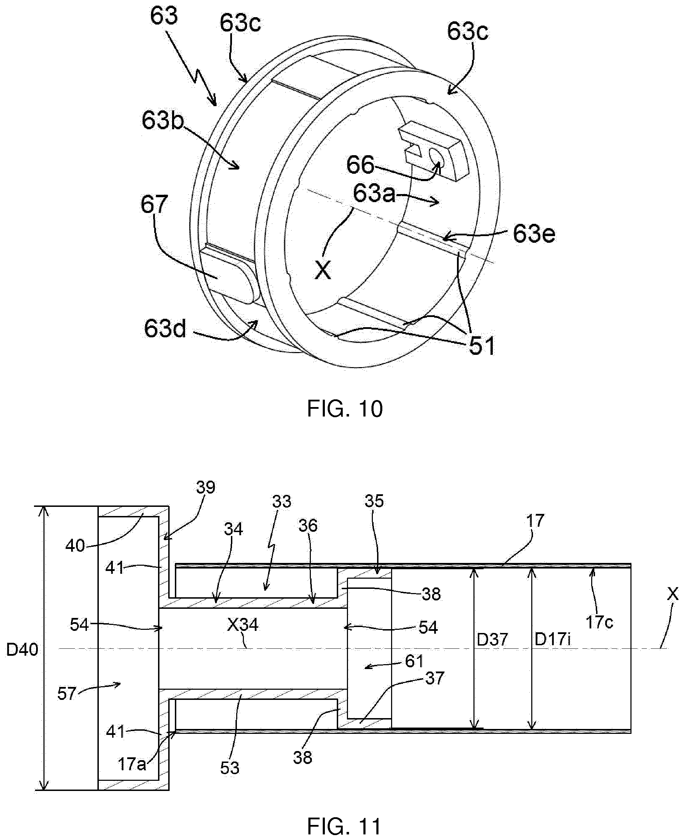

Ici et comme illustré aux figures 5 et 10, le ou les éléments viscoélastiques 51 font partie intégrante de la bague 63 et sont surmoulés par rapport à la bague 63.

En variante, le ou les éléments viscoélastiques 51 sont assemblés sur la surface intérieure 63a et/ou sur la surface extérieure 63b et/ou sur au moins l'une des surfaces latérales 63c de la bague 63, par exemple par collage.

Avantageusement, le ou les éléments viscoélastiques 51 peuvent être des plots en élastomère, autrement dit des godrons, comme illustrés aux figures 5 et 10.

Ici, l'actionneur électromécanique 11 comprend sept éléments viscoélastiques 51 répartis autour de l'axe de rotation X.

Le nombre d'éléments viscoélastiques n'est pas limitatif et peut être différent.

En variante, non représentée, l'élément viscoélastique 51 peut former la bague 63. Dans un tel cas, la bague 63 forme la partie souple et est dépourvue d'une armature rigide.

Avantageusement, dans la configuration assemblée de l'actionneur électromécanique 11, le carter 17 est fixé à la bague 63 au moyen d'au moins un élément de fixation 64, en particulier un seul élément de fixation 64, comme illustré à la figure 5.

Ainsi, la bague 63 est bloquée en translation à l'intérieur du carter 17 de l'actionneur électromécanique 11 et, plus particulièrement, par rapport au carter 17.

De cette manière, la bague 63 possède un jeu axial J restreint entre le support de couple 21, en particulier l'arbre 58 du support de couple 21, et l'organe mécanique de filtrage de vibrations 34, suivant la direction de l'axe de rotation X.

Par conséquent, un tel assemblage de la bague 63 à l'intérieur du carter 17 de l'actionneur électromécanique 11 permet de limiter une déformation axiale de l'organe mécanique de filtrage de vibrations 34.

Ici, l'élément de fixation 64 est une vis de fixation.

Le type et le nombre d'éléments de fixation ne sont pas limitatifs. Il peut s'agir, notamment, de rivets et pouvant être, par exemple, au nombre de deux ou plus et, en particulier, au nombre de trois disposés avec un angle de 120° l'un par rapport à l'autre, autour de l'axe de rotation.

Avantageusement, le carter 17 comprend au moins un trou de fixation 65, en particulier un seul trou de fixation 65, comme illustré à la figure 5, pouvant également être appelé deuxième trou de fixation 65 du carter 17.

Avantageusement, la bague 63 comprend au moins un trou de fixation 66, en particulier un seul trou de fixation 66, comme illustré aux figures 5 et 10.

Le nombre et la position angulaire des trous de fixation du carter et de la bague ne sont pas limitatifs et peuvent être différents. Les trous de fixation peuvent être au nombre de deux ou plus et, en particulier, au nombre de trois disposés avec un angle de 120° l'un par rapport à l'autre, autour de l'axe de rotation.

Avantageusement, dans la configuration assemblée de l'actionneur électromécanique 11, l'élément de fixation 64 coopère, autrement dit est configuré pour coopérer, avec le trou de fixation 65 du carter 17, avec le trou de fixation 66 de la bague 63 et, éventuellement, avec l'un des éléments viscoélastiques 51.

Avantageusement, la bague 63 comprend au moins un élément d'indexation 67, en particulier un seul élément d'indexation 67, comme illustré à la figure 10. L'élément d'indexation 67 de la bague 63 coopère, autrement dit est configuré pour coopérer, avec une surface interne 17c du carter 17 de l'actionneur électromécanique 11 et, plus particulièrement avec une encoche, non représentée, ménagée dans le carter 17, dans la configuration assemblée de l'actionneur électromécanique 11.

Ainsi, la bague 63 est orientée par rapport au carter 17 de l'actionneur électromécanique 11, autour de l'axe de rotation X, dans la configuration assemblée de l'actionneur électromécanique 11.

Ici, l'élément d'indexation 67 de la bague 63 est un plot ou une nervure.

Le nombre et la position angulaire des éléments d'indexation de la bague ne sont pas limitatifs et peuvent être différents. Les éléments d'indexation peuvent être au nombre de deux ou plus et, en particulier, au nombre de trois disposés avec un angle de 120° l'un par rapport à l'autre, autour de l'axe de rotation.

Avantageusement, les premiers bras 38 et, éventuellement, les deuxièmes bras 41 s'étendent suivant une direction parallèle ou confondue au plan P orthogonal à l'axe longitudinal X34.

Dans un deuxième et un troisième modes de réalisation, représenté aux figures 11 à 13, les éléments analogues à ceux du premier mode de réalisation portent les mêmes références et fonctionnent comme expliqué ci-dessus. Dans ce qui suit, on décrit, principalement, que ce qui distingue ces deuxième et troisième modes de réalisation du précédent. Dans ce qui suit, lorsqu'un signe de référence est utilisé sans être reproduit sur l'une des figures 11 à 13, il correspond à l'objet portant la même référence sur l'une des figures 1 à 10.

On décrit maintenant, en référence à la figure 11, le module mécanique de filtrage de vibrations 33 de l'actionneur électromécanique 11, illustré à la figure 3, selon le deuxième mode de réalisation de l'invention.

Ici, la deuxième portion d'extrémité 39 de l'organe mécanique de filtrage de vibrations 34 forme le support de couple 21.

Ainsi, dans le cas où la deuxième portion d'extrémité 39 de l'organe mécanique de filtrage de vibrations 34 forme le support de couple 21, la longueur L11 de l'actionneur électromécanique 11 peut être réduite, puisque le support de couple 21 est intégré à l'organe mécanique de filtrage de vibrations 34.

Avantageusement, le premier diamètre D37 du premier anneau 37 est inférieur ou égal au deuxième diamètre D40 du deuxième anneau 40.

Préférentiellement, dans le cas où la deuxième portion d'extrémité 39 de l'organe mécanique de filtrage de vibrations 34 forme le support de couple 21, le diamètre D40 du deuxième anneau 40 de la deuxième portion d'extrémité 39 est supérieur ou égal au diamètre intérieur D17i du carter 17.

Ici, une première partie du module mécanique de filtrage de vibrations 33, en particulier de l'organe mécanique de filtrage de vibrations 34, formée par la portion intermédiaire 36 et la première portion d'extrémité 35, est montée à l'intérieur du carter 17 de l'actionneur électromécanique 11. En outre, une deuxième partie du module mécanique de filtrage de vibrations 33, en particulier de l'organe mécanique de filtrage de vibrations 34, formée par la deuxième portion d'extrémité 39, est montée à l'extérieur du carter 17 de l'actionneur électromécanique 11.

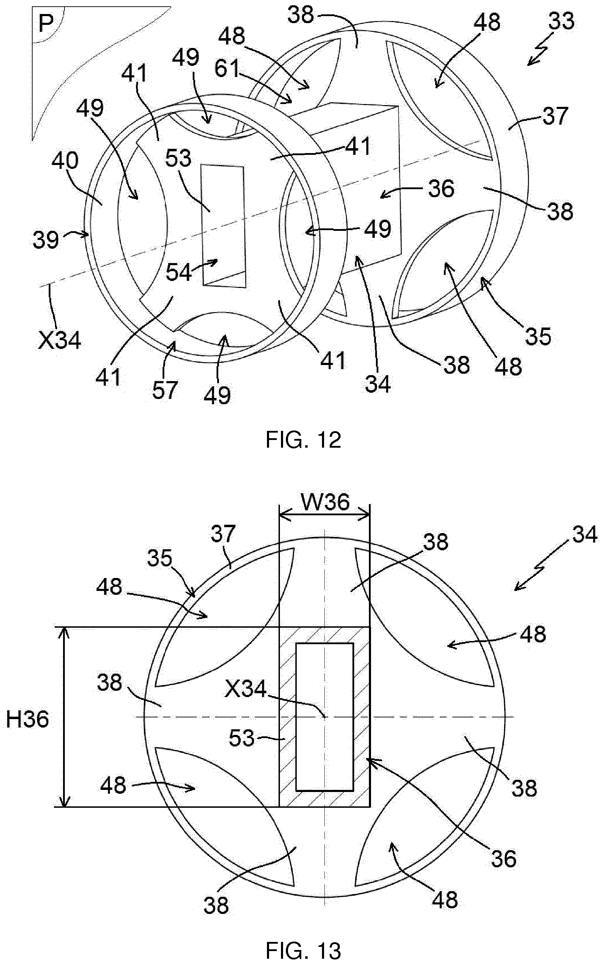

On décrit maintenant, en référence aux figures 12 et 13, le module mécanique de filtrage de vibrations 33 de l'actionneur électromécanique 11, illustré à la figure 3, selon le troisième mode de réalisation de l'invention.

Ici, la portion intermédiaire 36 présente une section de forme rectangulaire, dans le plan P orthogonal à l'axe longitudinal X34.

Ainsi, la section de forme rectangulaire de la portion intermédiaire 36, dans le plan P orthogonal à l'axe longitudinal X34, est particulièrement adaptée dans le cas où l'actionneur électromécanique 11 ne peut être installé que dans une seule position dans l'installation 6 et, en particulier, par rapport au dispositif de maintien 9, 23.

De cette manière, la hauteur H36 de la portion intermédiaire 36 est inférieure à une largeur W36 de celle-ci, dans le plan P orthogonal à l'axe longitudinal X34.

Avantageusement, la largeur W36 de la portion intermédiaire 36 est orthogonale au mur M du bâtiment B, illustré à la figure 1. Le mur M du bâtiment B est parallèle à la direction de l'enroulement et de déroulement de l'écran 2 autour du tube d'enroulement 4, dans la configuration assemblée de l'actionneur électromécanique 11 dans l'installation 6. En outre, la hauteur H36 de la portion intermédiaire 36 est parallèle à ce mur M du bâtiment B ou à la direction du champ de gravité.

Ainsi, dans un tel cas, l'organe mécanique de filtrage de vibrations 34 peut présenter une faible raideur en flexion dans une direction prépondérante de transmission de vibrations, en particulier orthogonale au mur M, tout en maintenant une raideur en flexion élevée dans le sens de la gravité, ainsi qu'une raideur élevée en torsion.

Ici, la première portion d'extrémité 35 comprend quatre premiers bras 38. En outre, la deuxième portion d'extrémité 39 comprend quatre deuxièmes bras 41.

Par ailleurs, la valeur angulaire α prédéterminée du décalage angulaire, autour de l'axe longitudinal X34, des premiers bras 38 par rapport aux deuxièmes bras 40 est de l'ordre de 45°.

Ici, la première portion d'extrémité 35 comprend quatre premiers dégagements 48 entre le premier anneau 37 et les quatre premiers bras 38, pour le passage d'un ou plusieurs câbles 18, 50, 52. Chaque premier dégagement 48 correspond à une ouverture formée entre deux premiers bras 38 adjacents et le premier anneau 37.

En outre, la deuxième portion d'extrémité 39 comprend quatre deuxièmes dégagements 49 entre le deuxième anneau 40 et les quatre deuxièmes bras 41, pour le passage d'un ou plusieurs câbles 18, 50, 52. Chaque deuxième dégagement 49 correspond à une ouverture formée entre deux deuxièmes bras 41 adjacents et le deuxième anneau 40.

On décrit à présent, en référence aux figures 1 à 13, des aspects du module mécanique de filtrage de vibrations 33 de l'actionneur électromécanique 11, illustré à la figure 3, applicables aux premier, deuxième et troisième modes de réalisation de l'invention, définis précédemment.

Les dimensions de l'organe mécanique de filtrage de vibrations 34 sont déterminées en fonction des exigences recherchées, en particulier en termes de tenue mécanique, de déformation et de raideur. Les dimensions de l'organe mécanique de filtrage de vibrations 34 sont également déterminées en fonction du choix de la matière de ce dernier.

Les dimensions de l'organe mécanique de filtrage de vibrations 34 à déterminer, en fonction des paramètres mentionnés ci-dessus, sont, notamment, la hauteur H36 et la largeur W36, dans le plan P orthogonal à l'axe longitudinal X34, ou le diamètre D36 de la portion intermédiaire 36, la longueur L36 de la portion intermédiaire 36, la longueur L38, L41 des premiers bras 38 et, éventuellement, des deuxièmes bras 41 entre la portion intermédiaire 36 et respectivement le premier anneau 37 ou le deuxième anneau 40, l'épaisseur e38, e41 des premiers bras 38 et, éventuellement, des deuxièmes bras 41, ainsi que, éventuellement, des évidements 55, 56 ménagés dans les premiers et deuxièmes bras 38, 41 et dans la portion intermédiaire 36.

Afin de réduire la raideur en flexion de l'organe mécanique de filtrage de vibrations 34, la modification du dimensionnement de ce dernier consiste à mettre en oeuvre au moins l'une des possibilités suivantes : allonger la longueur L36 de la portion intermédiaire 36, allonger la longueur L38, L41 des premiers bras 38 et, éventuellement, des deuxièmes bras 41, autrement dit à réduire la hauteur H36, dans le plan P orthogonal à l'axe longitudinal X34, ou le diamètre D36 de la portion intermédiaire 36, ou diminuer l'épaisseur e38, e41 des premiers bras 38 et, éventuellement, des deuxièmes bras 41.

Afin d'augmenter la tenue mécanique et de réduire les déformations de l'organe mécanique de filtrage de vibrations 34, la modification du dimensionnement de ce dernier consiste à mettre en oeuvre au moins l'une des possibilités suivantes : diminuer la longueur L36 de la portion intermédiaire 36, diminuer la longueur L38, L41 des premiers bras 38 et, éventuellement, des deuxièmes bras 41, autrement dit à augmenter la hauteur H36, dans le plan P orthogonal à l'axe longitudinal X34, ou le diamètre D36 de la portion intermédiaire 36, ou augmenter l'épaisseur e38, e41 des premiers bras 38 et, éventuellement, des deuxièmes bras 41.

Un autre paramètre à prendre en considération pour le dimensionnement de l'organe mécanique de filtrage de vibrations 34 est un poids d'un ensemble à suspendre au moyen du module mécanique de filtrage de vibrations 33.

En fonction du poids de l'ensemble à suspendre au moyen du module mécanique de filtrage de vibrations 33, le dimensionnement de l'organe mécanique de filtrage de vibrations 34 est à réaliser pour garantir une tenue en cisaillement de ce dernier.

Dans le premier mode de réalisation, l'ensemble à suspendre au moyen du module mécanique de filtrage de vibrations 33 est l'actionneur électromécanique 11, dans lequel la batterie 24 peut être intégrée.

Dans le deuxième mode de réalisation, l'ensemble à suspendre au moyen du module mécanique de filtrage de vibrations 33 est le dispositif d'occultation 3, soit le tube d'enroulement 4, l'écran 2 et l'actionneur électromécanique 11, dans lequel la batterie 24 peut être intégrée.

Dans un tel cas, l'organe mécanique de filtrage de vibrations 34 présente une raideur, aussi bien en flexion qu'en torsion, élevée et celui-ci est compact.

La structure de l'organe mécanique de filtrage de vibrations 34 selon le troisième mode de réalisation est particulièrement intéressante dans le cas où l'ensemble à suspendre au moyen du module mécanique de filtrage de vibrations 33 est le dispositif d'occultation 3.

Grâce à la présente invention, une telle structure de l'organe mécanique de filtrage de vibrations est simplifiée et permet de garantir une réduction d'une transmission de vibrations à partir de l'actionneur électromécanique vers l'installation, tout en minimisant les coûts d'obtention du module mécanique de filtrage de vibrations et donc de l'actionneur électromécanique.

De cette manière, l'industrialisation d'un tel module mécanique de filtrage de vibrations est facilitée.

La structure de l'organe mécanique de filtrage de vibrations permet d'obtenir une déformation de la portion intermédiaire, ainsi que d'obtenir un rotulage au niveau de la jonction entre la portion intermédiaire et la première portion d'extrémité.

La structure de l'organe mécanique de filtrage de vibrations permet également de minimiser la longueur de ce dernier et ainsi d'obtenir un module mécanique de filtrage de vibrations compact, de sorte à minimiser la longueur de l'actionneur électromécanique.

En outre, les premiers bras de la première portion d'extrémité permettent de garantir une raideur en torsion élevée et une raideur en flexion faible de l'organe mécanique de filtrage de vibrations.

Par ailleurs, un tel module mécanique de filtrage de vibrations est particulièrement adapté pour des actionneurs électromécaniques comprenant un carter ayant un faible diamètre.

Bien entendu, de nombreuses modifications peuvent être apportées aux exemples de réalisation décrits précédemment sans sortir du cadre de l'invention défini par les revendications.

En variante, non représentée, les premiers bras 38 et, éventuellement, les deuxièmes bras 41 peuvent s'étendre selon une direction inclinée par rapport à l'axe longitudinal X34. Cette direction inclinée par rapport à l'axe longitudinal X34 présente un angle, d'une part, strictement supérieur à 0° ou strictement inférieur à 180° et, d'autre part, strictement inférieur ou strictement supérieur à 90°.

En variante, non représentée, la deuxième portion d'extrémité 39 peut être dépourvue de bras 41. Dans un tel cas, la portion intermédiaire 36 est reliée au deuxième anneau 40 de la deuxième portion d'extrémité 39 au moyen d'une paroi pleine.

Avantageusement, la paroi pleine reliant la portion intermédiaire 36 au deuxième anneau 40 de la deuxième portion d'extrémité 39 peut s'étendre suivant une direction parallèle ou confondue au plan P orthogonal à l'axe longitudinal X34 ou selon une direction inclinée par rapport à l'axe longitudinal X34. Cette direction inclinée par rapport à l'axe longitudinal X34 présente un angle, d'une part, strictement supérieur à 0° ou strictement inférieur à 180° et, d'autre part, strictement inférieur ou strictement supérieur à 90°.

En variante, non représentée, le module mécanique de filtrage de vibrations 33 comprend un premier organe mécanique de filtrage de vibrations 34, tel que décrit précédemment, en référence aux premier et troisième modes de réalisation, et fixé, d'une part, au carter 17 et, d'autre part, au support de couple 21, comme mentionné ci-dessus dans le premier mode de réalisation, ainsi qu'un deuxième organe mécanique de filtrage de vibrations 34 tel que décrit précédemment, en référence aux premier et troisième modes de réalisation, et assemblé au niveau de l'arbre de sortie 20 de l'actionneur électromécanique 11 et, plus particulièrement, entre deux parties de l'arbre de sortie 20.

En variante, non représentée, l'actionneur électromécanique 11 est dépourvu de la bague 63, en particulier si l'organe mécanique de filtrage de vibrations 34 n'est pas sujet à un fluage de par son dimensionnement, si un fluage de l'organe mécanique de filtrage de vibrations 34 peut être accepté ou si un fluage de l'organe mécanique de filtrage de vibrations 34 peut être compensé par l'intermédiaire de l'unité électronique de contrôle 15, aussi bien dans le cas où la détection de fin de course et/ou d'obstacle est mise en oeuvre de manière mécanique ou de manière électronique.

En variante, non représentée, l'actionneur électromécanique 11 est dépourvu du ou des éléments viscoélastiques 51, en particulier si un jeu suffisant est ménagé entre le carter 17 et le support de couple 21, de sorte à empêcher un claquement du carter 17 sur le support de couple 21, dans la configuration assemblée de l'actionneur électromécanique 11 et lors de la mise en fonctionnement de celui-ci.

En variante, non représentée, l'actionneur électromécanique 11 est inséré dans un rail, en particulier de section carrée ou rectangulaire, pouvant être ouvert à l'une ou à ses deux extrémités, dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2.

En outre, les modes de réalisation et variantes envisagés peuvent être combinés pour générer de nouveaux modes de réalisation de l'invention, sans sortir du cadre de l'invention défini par les revendications.

## Revendications

1. Module mécanique de filtrage de vibrations (33) destiné à être monté au moins en partie à l'intérieur d'un carter (17) d'un actionneur électromécanique (11) pour une installation de fermeture, d'occultation ou de protection solaire (6),
le module mécanique de filtrage de vibrations (33) comprenant au moins un organe mécanique de filtrage de vibrations (34), l'organe mécanique de filtrage de vibrations (34) étant monobloc et s'étendant suivant un axe longitudinal (X34) destiné à être aligné sur un axe de rotation (X) d'un rotor (31) d'un moteur électrique (16), l'organe mécanique de filtrage de vibrations (34) comprenant au moins :
- une première portion d'extrémité (35), la première portion d'extrémité (35) comprenant au moins un premier anneau (37), et
- une portion intermédiaire (36), la portion intermédiaire (36) étant reliée à la première portion d'extrémité (35), le premier anneau (37) de la première portion d'extrémité (35) présentant un premier diamètre (D37) supérieur à une dimension (H36, D36) de la portion intermédiaire (36) la plus grande et mesurée dans un plan (P) orthogonal à l'axe longitudinal (X34),
**caractérisé en ce que** la première portion d'extrémité (35) comprend, en outre, une pluralité de premiers bras (38), chaque premier bras (38) reliant la portion intermédiaire (36) au premier anneau (37).

2. Module mécanique de filtrage de vibrations (33) destiné à être monté au moins en partie à l'intérieur d'un carter (17) d'un actionneur électromécanique (11) pour une installation de fermeture, d'occultation ou de protection solaire (6) selon la revendication 1, **caractérisé en ce que** la portion intermédiaire (36) présente une section de forme circulaire, dans le plan (P) orthogonal à l'axe longitudinal (X34) ou **en ce que** la portion intermédiaire (36) présente une section de forme rectangulaire, dans le plan (P) orthogonal à l'axe longitudinal (X34).

3. Module mécanique de filtrage de vibrations (33) destiné à être monté au moins en partie à l'intérieur d'un carter (17) d'un actionneur électromécanique (11) pour une installation de fermeture, d'occultation ou de protection solaire (6) selon la revendication 1 ou selon la revendication 2, **caractérisé en ce que** :
- l'organe mécanique de filtrage de vibrations (34) comprend, en outre, au moins une deuxième portion d'extrémité (39), la deuxième portion d'extrémité (39) étant opposée à la première portion d'extrémité (35), suivant l'axe longitudinal (X34), la deuxième portion d'extrémité (39) comprenant au moins un deuxième anneau (40),
- la portion intermédiaire (36) est reliée à la deuxième portion d'extrémité (39) et disposée entre les première et deuxième portions d'extrémité (35, 39),
- le deuxième anneau (40) de la deuxième portion d'extrémité (39) présente un deuxième diamètre (D40) supérieur à la dimension (H36, D36) de la portion intermédiaire (36) la plus grande et mesurée dans le plan (P) orthogonal à l'axe longitudinal (X34).

4. Module mécanique de filtrage de vibrations (33) destiné à être monté au moins en partie à l'intérieur d'un carter (17) d'un actionneur électromécanique (11) pour une installation de fermeture, d'occultation ou de protection solaire (6) selon la revendication 3, **caractérisé en ce que** le deuxième diamètre (D40) du deuxième anneau (40) est inférieur au premier diamètre (D37) du premier anneau (37), ou inversement.

5. Module mécanique de filtrage de vibrations (33) destiné à être monté au moins en partie à l'intérieur d'un carter (17) d'un actionneur électromécanique (11) pour une installation de fermeture, d'occultation ou de protection solaire (6) selon la revendication 3 ou selon la revendication 4, **caractérisé en ce que** la deuxième portion d'extrémité (39) comprend, en outre, une pluralité de deuxièmes bras (41), chaque deuxième bras (41) reliant la portion intermédiaire (36) au deuxième anneau (40).

6. Module mécanique de filtrage de vibrations (33) destiné à être monté au moins en partie à l'intérieur d'un carter (17) d'un actionneur électromécanique (11) pour une installation de fermeture, d'occultation ou de protection solaire (6) selon la revendication 5, **caractérisé en ce que** les premiers bras (38) sont décalés angulairement par rapport aux deuxièmes bras (40), autour de l'axe longitudinal (X34), d'une valeur angulaire (a) prédéterminée.

7. Actionneur électromécanique (11) pour une installation de fermeture, d'occultation ou de protection solaire (6), l'actionneur électromécanique (11) comprenant au moins un moteur électrique (16) et un carter (17), le moteur électrique (16) étant monté à l'intérieur du carter (17), dans une configuration assemblée de l'actionneur électromécanique (11), **caractérisé en ce que** l'actionneur électromécanique (17) comprend au moins un module mécanique de filtrage de vibrations (33) selon l'une quelconque des revendications 1 à 6.

8. Actionneur électromécanique (11) pour une installation de fermeture, d'occultation ou de protection solaire (6) selon la revendication 7, **caractérisé en ce que**, dans la configuration assemblée de l'actionneur électromécanique (11), la première portion d'extrémité (35) de l'organe mécanique de filtrage de vibrations (34) est fixée au carter (17) au moyen de premiers éléments de fixation (44).

9. Actionneur électromécanique (11) pour une installation de fermeture, d'occultation ou de protection solaire (6) selon la revendication 7 ou selon la revendication 8, comprenant le module mécanique de filtrage de vibrations selon l'une quelconque des revendications 3 à 6, **caractérisé en ce que** l'actionneur électromécanique (11) comprend, en outre, un support de couple (21), le support de couple (21) étant disposé au niveau d'une première extrémité (17a) du carter (17) de l'actionneur électromécanique (11), dans la configuration assemblée de l'actionneur électromécanique (11), et **en ce que** la deuxième portion d'extrémité (39) de l'organe mécanique de filtrage de vibrations (34) est fixée au support de couple (21) au moyen de deuxièmes éléments de fixation (45).

10. Actionneur électromécanique (11) pour une installation de fermeture, d'occultation ou de protection solaire (6) selon la revendication 9, **caractérisé en ce que** l'actionneur électromécanique (11) comprend une bague (63) et **en ce que** la bague (63) est montée autour d'un arbre (58) du support de couple (21).

11. Actionneur électromécanique (11) pour une installation de fermeture, d'occultation ou de protection solaire (6) selon la revendication 10, **caractérisé en ce que** dans la configuration assemblée de l'actionneur électromécanique (11), l'actionneur électromécanique (11) comprend, en outre, au moins un élément viscoélastique (51) disposé entre la deuxième portion d'extrémité (39) de l'organe mécanique de filtrage de vibrations (34) et la bague (63) et/ou entre le carter (17) de l'actionneur électromécanique (11) et la bague (63) et/ou entre le support de couple (21) et la bague (63).

12. Actionneur électromécanique (11) pour une installation de fermeture, d'occultation ou de protection solaire (6) selon la revendication 7 ou selon la revendication 8, comprenant le module mécanique de filtrage de vibrations selon l'une quelconque des revendications 3 à 6, **caractérisé en ce que** l'actionneur électromécanique (11) comprend, en outre, un support de couple (21), le support de couple (21) étant disposé au niveau d'une première extrémité (17a) du carter (17) de l'actionneur électromécanique (11), dans la configuration assemblée de l'actionneur électromécanique (11), et **en ce que** la deuxième portion d'extrémité (39) de l'organe mécanique de filtrage de vibrations (34) forme le support de couple (21).

13. Actionneur électromécanique (11) pour une installation de fermeture, d'occultation ou de protection solaire (6) selon l'une quelconque des revendications 7 à 12, **caractérisé en ce que** l'actionneur électromécanique (11) comprend au moins une batterie (24), la batterie (24) étant disposée à l'intérieur du carter (17).

14. Actionneur électromécanique (11) pour une installation de fermeture, d'occultation ou de protection solaire (6) selon l'une quelconque des revendications 7 à 13, **caractérisé en ce que** la première portion d'extrémité (35) comprend au moins un premier dégagement (48) entre le premier anneau (37) et l'un des premiers bras (38) pour le passage d'au moins un câble (18, 50, 52).

15. Installation de fermeture, d'occultation ou de protection solaire (6) comprenant un écran (2), un tube d'enroulement (4) et un actionneur électromécanique (11) selon l'une quelconque des revendications 7 à 14, l'écran (2) étant enroulable sur le tube d'enroulement (4) et le tube d'enroulement (4) étant entraîné en rotation par l'actionneur électromécanique (11).

## Patentansprüche

1. Mechanisches Vibrationsfilterungsmodul (33) zum wenigstens teilweisen Einbau innerhalb eines Gehäuses (17) eines elektromechanischen Aktors (11) für eine Schließ-, Verdeckungs- oder Sonnenschutzeinrichtung (6),
wobei das mechanische Vibrationsfilterungsmodul (33) wenigstens ein mechanisches Vibrationsfilterungsorgan (34) umfasst, wobei das Vibrationsfilterungsorgan (34) einstückig ist und sich entlang einer Längsachse (X34) erstreckt, die dazu bestimmt ist, auf einer Drehachse (X) eines Rotors (31) eines Elektromotors (16) ausgerichtet zu sein, wobei das mechanische Vibrationsfilterungsorgan (34) wenigstens Folgendes umfasst:
- einen ersten Endabschnitt (35), wobei der erste Endabschnitt (35) wenigstens einen ersten Ring (37) umfasst, und
- einen Zwischenabschnitt (36), wobei der Zwischenabschnitt (36) mit dem ersten Endabschnitt (35) verbunden ist, wobei der erste Ring (37) des ersten Endabschnitts (35) einen ersten Durchmesser (D37) aufweist, der größer als eine größte und in einer Ebene (P) orthogonal zur Längsachse (X34) gemessene Abmessung (H36, D36) des Zwischenabschnitts (36) ist, **dadurch gekennzeichnet, dass** der erste Endabschnitt (35) ferner mehrere erste Arme (38) umfasst, wobei jeder erste Arm (38) den Zwischenabschnitt (36) mit dem ersten Ring (37) verbindet.

2. Mechanisches Vibrationsfilterungsmodul (33) zum wenigstens teilweisen Einbau innerhalb eines Gehäuses (17) eines elektromechanischen Aktors (11) für eine Schließ-, Verdeckungs- oder Sonnenschutzeinrichtung (6) nach Anspruch 1, **dadurch gekennzeichnet, dass** der Zwischenabschnitt (36) einen kreisförmigen Querschnitt in der Ebene (P) orthogonal zur Längsachse (X34) aufweist, oder dadurch, dass der Zwischenabschnitt (36) einen rechteckigen Querschnitt in der Ebene (P) orthogonal zur Längsachse (X34) aufweist.

3. Mechanisches Vibrationsfilterungsmodul (33) zum wenigstens teilweisen Einbau innerhalb eines Gehäuses (17) eines elektromechanischen Aktors (11) für eine Schließ-, Verdeckungs- oder Sonnenschutzeinrichtung (6) nach Anspruch 1 oder 2, **dadurch gekennzeichnet, dass**:
- das mechanische Vibrationsfilterungsorgan (34) ferner wenigstens einen zweiten Endabschnitt (39) umfasst, wobei der zweite Endabschnitt (39) dem ersten Endabschnitt (35) entlang der Längsachse (X34) gegenüberliegt, wobei der zweite Endabschnitt (39) wenigstens einen zweiten Ring (40) umfasst,
- der Zwischenabschnitt (36) mit dem zweiten Endabschnitt (39) verbunden und zwischen dem ersten und zweiten Endabschnitt (35, 39) angeordnet ist,
- der zweite Ring (40) des zweiten Endabschnitts (39) einen zweiten Durchmesser (D40) aufweist, der größer als die größte und in der Ebene (P) orthogonal zur Längsachse (X34) gemessene Abmessung (H36, D36) des Zwischenabschnitts (36) ist.

4. Mechanisches Vibrationsfilterungsmodul (33) zum wenigstens teilweisen Einbau innerhalb eines Gehäuses (17) eines elektromechanischen Aktors (11) für eine Schließ-, Verdeckungs- oder Sonnenschutzeinrichtung (6) nach Anspruch 3, **dadurch gekennzeichnet, dass** der zweite Durchmesser (D40) des zweiten Rings (40) kleiner als der erste Durchmesser (D37) des ersten Rings (37) ist oder umgekehrt.

5. Mechanisches Vibrationsfilterungsmodul (33) zum wenigstens teilweisen Einbau innerhalb eines Gehäuses (17) eines elektromechanischen Aktors (11) für eine Schließ-, Verdeckungs- oder Sonnenschutzeinrichtung (6) nach Anspruch 3 oder 4, **dadurch gekennzeichnet, dass** der zweite Endabschnitt (39) ferner mehrere zweite Arme (41) umfasst, wobei jeder zweite Arm (41) den Zwischenabschnitt (36) mit dem zweiten Ring (40) verbindet.

6. Mechanisches Vibrationsfilterungsmodul (33) zum wenigstens teilweisen Einbau innerhalb eines Gehäuses (17) eines elektromechanischen Aktors (11) für eine Schließ-, Verdeckungs- oder Sonnenschutzeinrichtung (6) nach Anspruch 5, **dadurch gekennzeichnet, dass** die ersten Arme (38) im Verhältnis zu den zweiten Armen (40) um einen vorbestimmten Winkelwert (a) um die Längsachse (X34) winkelversetzt sind.

7. Elektromechanischer Aktor (11) für eine Schließ-, Verdeckungs- oder Sonnenschutzeinrichtung (6), wobei der elektromechanische Aktor (11) wenigstens einen Elektromotor (16) und ein Gehäuse (17) umfasst, wobei der Elektromotor (16) in einer zusammengesetzten Konfiguration des elektromechanischen Aktors (11) innerhalb des Gehäuses (17) eingebaut ist, **dadurch gekennzeichnet, dass** der elektromechanische Aktor (17) wenigstens ein mechanisches Vibrationsfilterungsmodul (33) nach einem der Ansprüche 1 bis 6 umfasst.

8. Elektromechanischer Aktor (11) für eine Schließ-, Verdeckungs- oder Sonnenschutzeinrichtung (6) nach Anspruch 7, **dadurch gekennzeichnet, dass** in der zusammengesetzten Konfiguration des elektromechanischen Aktors (11) der erste Endabschnitt (35) des mechanischen Vibrationsfilterungsorgans (34) mittels erster Befestigungselemente (44) am Gehäuse (17) befestigt ist.

9. Elektromechanischer Aktor (11) für eine Schließ-, Verdeckungs- oder Sonnenschutzeinrichtung (6) nach Anspruch 7 oder 8, umfassend das mechanische Vibrationsfilterungsmodul nach einem der Ansprüche 3 bis 6, **dadurch gekennzeichnet, dass** der elektromechanische Aktor (11) ferner eine Drehmomentstütze (21) umfasst, wobei die Drehmomentstütze (21) in der zusammengesetzten Konfiguration des elektromechanischen Aktors (11) an einem ersten Ende (17a) des Gehäuses (17) des elektromechanischen Aktors (11) angeordnet ist, und dadurch, dass der zweite Endabschnitt (39) des mechanischen Vibrationsfilterungsorgans (34) mittels zweiter Befestigungselemente (45) an der Drehmomentstütze (21) befestigt ist.

10. Elektromechanischer Aktor (11) für eine Schließ-, Verdeckungs- oder Sonnenschutzeinrichtung (6) nach Anspruch 9, **dadurch gekennzeichnet, dass** der elektromechanische Aktor (11) eine Hülse (63) umfasst, und dadurch, dass die Hülse (63) um eine Welle (58) der Drehmomentstütze (21) befestigt ist.

11. Elektromechanischer Aktor (11) für eine Schließ-, Verdeckungs- oder Sonnenschutzeinrichtung (6) nach Anspruch 10, **dadurch gekennzeichnet, dass** in der zusammengesetzten Konfiguration des elektromechanischen Aktors (11) der elektromechanische Aktor (11) ferner wenigstens ein viskoelastisches Element (51) umfasst, das zwischen dem zweiten Endabschnitt (39) des mechanischen Vibrationsfilterungsorgans (34) und der Hülse (63) und/oder zwischen dem Gehäuse (17) des elektromechanischen Aktors (11) und der Hülse (63) und/oder zwischen der Drehmomentstütze (21) und der Hülse (63) angeordnet ist.

12. Elektromechanischer Aktor (11) für eine Schließ-, Verdeckungs- oder Sonnenschutzeinrichtung (6) nach Anspruch 7 oder 8, umfassend das mechanische Vibrationsfilterungsmodul nach einem der Ansprüche 3 bis 6, **dadurch gekennzeichnet, dass** der elektromechanische Aktor (11) ferner eine Drehmomentstütze (21) umfasst, wobei die Drehmomentstütze (21) in der zusammengesetzten Konfiguration des elektromechanischen Aktors (11) an einem ersten Ende (17a) des Gehäuses (17) des elektromechanischen Aktors (11) angeordnet ist, und dadurch, dass der zweite Endabschnitt (39) des mechanischen Vibrationsfilterungsorgans (34) die Drehmomentstütze (21) bildet.

13. Elektromechanischer Aktor (11) für eine Schließ-, Verdeckungs- oder Sonnenschutzeinrichtung (6) nach einem der Ansprüche 7 bis 12, **dadurch gekennzeichnet, dass** der elektromechanische Aktor (11) wenigstens eine Batterie (24) umfasst, wobei die Batterie (24) innerhalb des Gehäuses (17) angeordnet ist.

14. Elektromechanischer Aktor (11) für eine Schließ-, Verdeckungs- oder Sonnenschutzeinrichtung (6) nach einem der Ansprüche 7 bis 13, **dadurch gekennzeichnet, dass** der erste Endabschnitt (35) wenigstens eine erste Aussparung (48) zwischen dem ersten Ring (37) und einem der ersten Arme (38) für den Durchtritt wenigstens eines Kabels (18, 50, 52) umfasst.

15. Schließ-, Verdeckungs- oder Sonnenschutzeinrichtung (6) umfassend einen Schirm (2), ein Aufrollrohr (4) und einen elektromechanischen Aktor (11) nach einem der Ansprüche 7 bis 14, wobei der Schirm (2) auf dem Aufrollrohr (4) aufrollbar ist und das Aufrollrohr (4) von dem elektromechanischen Aktor (11) gedreht wird.

## Claims

1. A mechanical module for filtering vibrations (33) intended to be mounted at least partially inside a casing (17) of an electromechanical actuator (11) for a closure, covering or solar protection installation (6),
the mechanical module for filtering vibrations (33) comprising at least a mechanical vibration filtering member (34), the mechanical vibration filtering member (34) being made in one piece and extending along a longitudinal axis (X34) intended to be aligned with an axis of rotation (X) of a rotor (31) of an electric motor (16),
the mechanical vibration filtering member (34) comprising at least:
- a first end portion (35), the first end portion (35) comprising at least a first ring (37), and
- an intermediate portion (36), the intermediate portion (36) being connected to the first end portion (35), the first ring (37) of the first end portion (35) having a first diameter (D37) greater than a greatest dimension (H36, D36) of the intermediate portion (36) measured in a plane (P) orthogonal to the longitudinal axis (X34),
**characterized in that** the first end portion (35) further comprises a plurality of first arms (38), each first arm (38) connecting the intermediate portion (36) to the first ring (37).

2. The mechanical module for filtering vibrations (33) intended to be mounted at least partially inside a casing (17) of an electromechanical actuator (11) for a closure, covering or solar protection installation (6) according to claim 1, **characterized in that** the intermediate portion (36) has a cross section of circular shape, in the plane (P) orthogonal to the longitudinal axis (X34) or **in that** the intermediate portion (36) has a cross section of rectangular shape, in the plane (P) orthogonal to the longitudinal axis (X34).

3. The mechanical module for filtering vibrations (33) intended to be mounted at least partially inside a casing (17) of an electromechanical actuator (11) for a closure, covering or solar protection installation (6) according to claim 1 or according to claim 2, **characterized in that**:
- the mechanical vibration filtering member (34) further comprises at least a second end portion (39), the second end portion (39) being opposed to the first end portion (35) along the longitudinal axis (X34), the second end portion (39) comprising at least a second ring (40),
- the intermediate portion (36) is connected to the second end portion (39) and is positioned between the first and second end portions (35, 39),
- the second ring (40) of the second end portion (39) has a second diameter (D40) greater than the greatest dimension (H36, D36) of the intermediate portion (36) measured in the plane (P) orthogonal to the longitudinal axis (X34).

4. The mechanical module for filtering vibrations (33) intended to be mounted at least partially inside a casing (17) of an electromechanical actuator (11) for a closure, covering or solar protection installation (6) according to claim 3, **characterized in that** the second diameter (D40) of the second ring (40) is less than the first diameter (D37) of the first ring (37), or vice versa.

5. The mechanical module for filtering vibrations (33) intended to be mounted at least partially inside a casing (17) of an electromechanical actuator (11) for a closure, covering or solar protection installation (6) according to claim 3 or according to claim 4, **characterized in that** the second end portion (39) further comprises a plurality of second arms (41), each second arm (41) connecting the intermediate portion (36) to the second ring (40).

6. The mechanical module for filtering vibrations (33) intended to be mounted at least partially inside a casing (17) of an electromechanical actuator (11) for a closure, covering or solar protection installation (6) according to claim 5, **characterized in that** the first arms (38) are angularly offset from the second arms (40), around the longitudinal axis (X34), by a predetermined angular value (a).

7. An electromechanical actuator (11) for a closure, covering or solar protection installation (6), the electromechanical actuator (11) comprising at least an electric motor (16) and a casing (17), the electric motor (16) being mounted inside the casing (17), in an assembled configuration of the electromechanical actuator (11), **characterized in that** the electromechanical actuator (17) comprises at least a mechanical module for filtering vibrations (33) according to any one of the claims 1 to 6.

8. The electromechanical actuator (11) for a closure, covering or solar protection installation (6) according to claim 7, **characterized in that**, in the assembled configuration of the electromechanical actuator (11), the first end portion (35) of the mechanical vibration filtering member (34) is fastened to the casing (17) by means of first fastening elements (44).

9. The electromechanical actuator (11) for a closure, covering or solar protection installation (6) according to claim 7 or according to claim 8, comprising the mechanical module for filtering vibrations according to any one of the claims 3 to 6, **characterized in that** the electromechanical actuator (11) further comprises a torque support (21), the torque support (21) being positioned at a first end (17a) of the casing (17) of the electromechanical actuator (11), in the assembled configuration of the electromechanical actuator (11), and **in that** the second end portion (39) of the mechanical vibration filtering member (34) is fastened to the torque support (21) by means of second fastening elements (45).

10. The electromechanical actuator (11) for a closure, covering or solar protection installation (6) according to claim 9, **characterized in that** the electromechanical actuator (11) comprises a bushing (63) and **in that** the bushing (63) is mounted around a shaft (58) of the torque support (21).

11. The electromechanical actuator (11) for a closure, covering or solar protection installation (6) according to claim 10, **characterized in that**, in the assembled configuration of the electromechanical actuator (11), the electromechanical actuator (11) further comprises at least a viscoelastic element (51) positioned between the second end portion (39) of the mechanical vibration filtering member (34) and the bushing (63) and/or between the casing (17) of the electromechanical actuator (11) and the bushing (63) and/or between the torque support (21) and the bushing (63).

12. The electromechanical actuator (11) for a closure, covering or solar protection installation (6) according to claim 7 or according to claim 8, comprising the mechanical module for filtering vibrations according to any one of the claims 3 to 6, **characterized in that** the electromechanical actuator (11) further comprises a torque support (21), the torque support (21) being positioned at a first end (17a) of the casing (17) of the electromechanical actuator (11), in the assembled configuration of the electromechanical actuator (11), and **in that** the second end portion (39) of the mechanical vibration filtering member (34) forms the torque support (21).

13. The electromechanical actuator (11) for a closure, covering or solar protection installation (6) according to any one of the claims 7 to 12, **characterized in that** the electromechanical actuator (11) comprises at least a battery (24), the battery (24) being positioned inside the casing (17).

14. The electromechanical actuator (11) for a closure, covering or solar protection installation (6) according to any one of the claims 7 to 13, **characterized in that** the first end portion (35) comprises at least a first gap (48) between the first ring (37) and one of the first arms (38) for the passage of at least one cable (18, 50, 52).

15. A closure, covering or solar protection installation (6) comprising a screen (2), a winding tube (4) and an electromechanical actuator (11) according to any one of the claims 7 to 14, the screen (2) being windable onto the winding tube (4) and the winding tube (4) being driven in rotation by the electromechanical actuator (11).
